# EUROPEAN PATENT SPECIFICATION

(11) **EP 4 278 495 B1**
(45) Date of publication and mention of the grant of the patent: **09.09.2026**
(21) Application number: 22701038.6
(22) Date of filing: 14.01.2022
(51) Int. Cl.: H04L 1/00, H04L 5/00

(54) **TYPE 2 HARQ CODEBOOK DETERMINATION IN PRESENCE OF PDCCH REPETITIONS**
BESTIMMUNG DES TYP-2-HARQ-CODEBUCHS IN GEGENWART VON PDCCH-WIEDERHOLUNGEN
DÉTERMINATION D'UN LIVRE DE CODES DE HARQ DE TYPE 2 EN CAS DE RÉPÉTITIONS DE PDCCH

(30) Priority: 15.01.2021 US 202163138117 P; 18.01.2021 US 202163138721 P
(43) Date of publication of application: 22.11.2023
(73) Proprietor: Telefonaktiebolaget LM Ericsson (publ), 164 83 Stockholm (SE)
(72) Inventor: GAO, Shiwei, Nepean, Ontario K2J 0H5 (CA); MURUGANATHAN, Siva, Stittsville, Ontario K2S 0R3 (CA)
(74) Representative: Ericsson
(86) International application number: PCT/IB2022/050319
(87) International publication number: WO 2022/153253

(56) References cited:
- WO-A1-2020/228480
- WO-A1-2021/003259
- NTT DOCOMO ET AL: "Enhancements on multi-TRP/panel transmission", vol. RAN WG1, no. Prague, CZ; 20190826 - 20190830, 17 August 2019 (2019-08-17), pages 1 - 36, XP051765806, Retrieved from the Internet <URL:http://www.3gpp.org/ftp/tsg_ran/WG1_RL1/TSGR1_98/Docs/R1-1909201.zip> [retrieved on 20190817]

## Description

### Technical Field

The present disclosure relates to codebook determination.

### Background

NR uses CP-OFDM (Cyclic Prefix Orthogonal Frequency Division Multiplexing) in both downlink (i.e., from a network node, gNB, or base station, to a user equipment or UE) and uplink (i.e., from UE to gNB). DFT spread OFDM is also supported in the uplink. In the time domain, NR downlink and uplink are organized into equally sized subframes of 1ms each. A subframe is further divided into multiple slots of equal duration. The slot length depends on subcarrier spacing. For subcarrier spacing of *Δf = 15kHz,* there is only one slot per subframe, and each slot consists of 14 OFDM symbols.

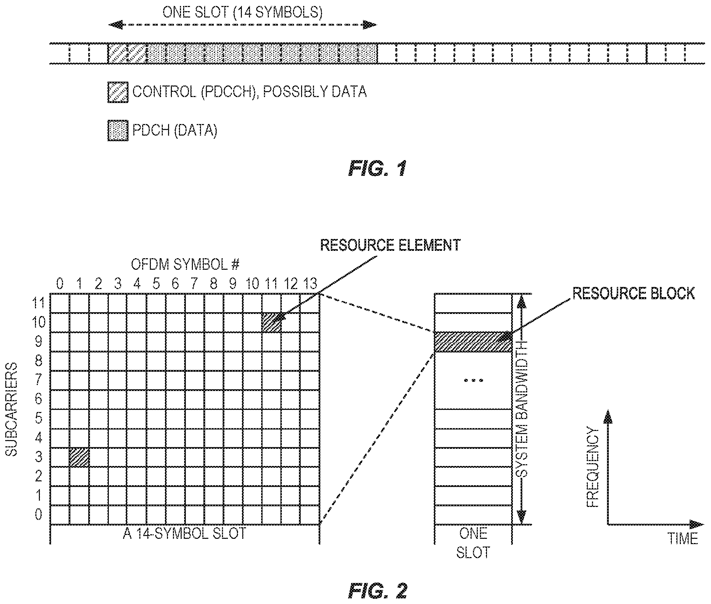

Data scheduling in NR is typically in slot basis, an example is shown in Figure 1 with a 14-symbol slot, where the first two symbols contain Physical Downlink Control Channel (PDCCH) and the rest contains physical shared data channel, either Physical Downlink Shared Channel (PDSCH) or Physical Uplink Shared Channel (PUSCH).

Different subcarrier spacing values are supported in NR. The supported subcarrier spacing values (also referred to as different numerologies) are given by *Δf =* (15 × 2*^{µ}*)*kHz* where *µ* ∈ 0,1,2,3,4. Δ*f = 15kHz* is the basic subcarrier spacing. The slot durations at different subcarrier spacings is given by $\frac{1}{{2}^{μ}}$ *ms.*

In the frequency domain, a system bandwidth is divided into resource blocks (RBs), each corresponding to twelve contiguous subcarriers. The RBs are numbered starting with 0 from one end of the system bandwidth. The basic NR physical time-frequency resource grid is illustrated in Figure 2, where only one resource block (RB) within a 14-symbol slot is shown. One OFDM subcarrier during one OFDM symbol interval forms one resource element (RE).

Downlink transmissions can be either dynamically scheduled in which the gNB transmits a DL assignment via Downlink Control Information (DCI) over PDCCH (Physical Downlink Control Channel) to a UE for each PDSCH transmission, or Semi-Persistent Scheduled (SPS) in which one or more DL SPS are semi-statically configured and each can be activated or deactivated by a DCI.

There are three DCI formats defined for scheduling PDSCH in NR, i.e., DCI format 1_0, DCI format 1_1, and DCI format 1_2. DCI format 1-0 has a smaller size and can be used when a UE is not fully connected to the network while DCI format 1_1 and DCI format 1_2 can be used for scheduling MIMO (Multiple-Input-Multiple-Output) transmissions with up to 2 transport blocks (TBs). The DCI formats are referred to as DL DCI formats.

A UE monitors a set of PDCCH candidates for potential PDCCHs. A PDCCH candidate consists of *L* ∈ [1,2,4,8,16] control-channel elements (CCEs) in a Control Resource Set (CORESET). A CCE consists of 6 resource-element groups (REGs) where a REG equals one RB during one OFDM symbol. L is referred to as the CCE aggregation level.

The set of PDCCH candidates is defined in terms of PDCCH search space (SS) sets. A SS set can be a Common Search Space (CSS) set or a UE Specific Search Space (USS) set. A UE can be configured with up to 10 SS sets per bandwidth part (BWP) for monitoring PDCCH candidates.

Each SS set is associated with a CORESET. A CORESET consists of ${N}_{RB}^{CORESET}$ resource blocks in the frequency domain and ${N}_{symb}^{CORESET} ∈ \left\{1, 2, 3\right\}$ consecutive OFDM symbols in the time domain. In NR Rel-15, a UE can be configured with up to 3 CORESETs per bandwidth part.

For each SS set, a UE is configured with the following parameters:
- a PDCCH monitoring periodicity of *kₛ* slots and a PDCCH monitoring offset of *oₛ* slots
- a PDCCH monitoring pattern within a slot, indicating first symbol(s) of the CORESET within a slot for PDCCH monitoring
- a duration of *Tₛ* < *kₛ* slots indicating a number of slots that the search space set exists
- a number of PDCCH candidates ${M}_{s}^{\left(L\right)}$ per CCE aggregation level L

A UE determines a PDCCH monitoring occasion on an active DL BWP from the PDCCH monitoring periodicity, the PDCCH monitoring offset, and the PDCCH monitoring pattern within a slot. For search space set s, the UE determines that a PDCCH monitoring occasion(s) exists in slot ${n}_{s , f}^{μ}$ in frame *n_{f}* if $\left({n}_{f}. {N}_{slot}^{frame , μ}+{n}_{s , f}^{μ}-{o}_{s}\right) {modk}_{s} = 0$ , where ${N}_{slot}^{frame , μ}$ is the number of slots per radio frame. The UE monitors PDCCH candidates for search space set s for *Tₛ* consecutive slots, starting from slot ${n}_{s , f}^{μ}$, and does not monitor PDCCH candidates for search space set s for the next *kₛ - Tₛ* consecutive slots.

A UE detects PDCCH in each PDCCH monitoring occasion. If a PDCCH is detected, the UE decodes the corresponding PDSCH based on the decoded control information in the PDCCH.

In Rel-16, to better support multiple PDCCH monitoring occasions in a slot, new PDCCH monitoring capabilities are defined at least in terms of the maximum number of non-overlapping CCEs for channel estimation. The new limit is discussed based on the concept of PDCCH monitoring span. In short, the PDCCH monitoring span definition provides a set of rules for UE and gNB to have the same understanding on PDCCH monitoring span pattern in a slot based on CORESET/search space configuration and UE capability signaling related to PDCCH monitoring. The UE signals a candidate value set which contains parameters related to span gap X (minimum gap in OFDM symbols between two consecutive spans) and span length Y in OFDM symbols. Together with the CORESET/search space configuration, the monitoring span pattern can then be derived. The span pattern may contain multiple spans in a slot is repeated over multiple slots.

### NR HARQ ACK/NACK feedback

When a PDCCH is detected by the UE, the decoding status of its scheduled PDSCH is sent back to the gNB in the form of Hybrid Automatic Repeat Request (HARQ) Acknowledgement (ACK) over a Physical Uplink Control Channel (PUCCH) resource. If the PUCCH overlaps with a PUSCH transmission by the same UE, HARQ ACK feedback can also be conveyed on PUSCH.

Similarly, when a DL SPS deactivation DCI or a DCI for Secondary cell (SCell) dormancy is received by the UE, a HARQ ACK is sent by the UE to acknowledge the reception of the DCI.

If the UE detects a DCI format scheduling a PDSCH reception ending in slot *n* or if the UE detects a DCI indicating a SPS PDSCH release or SCell dormancy through a PDCCH reception ending in slot *n*, the UE provides corresponding HARQ-ACK information in a PUCCH transmission in slot *n+k,* where *k* is indicated by a PDSCH-to-HARQ-timing-indicator field in the DCI format, if present, or provided by dl-DataToUL-ACK. *k* is also referred to as K1. For DCI format 1-0, *k* can be one of {1, 2, 3, 4, 5, 6, 7, 8}. For DCI format 1-1 and DCI format 1_2, k can be one of a set of values configured in dl-DataToUL-ACK. The set of values can be in the range of {0,1, ...,15}. Up to eight values can be configured in the set.

In case of carrier aggregation (CA) with multiple carriers and/or TDD operation, multiple aggregated HARQ ACK/NACK bits may be sent in a single PUCCH resource.

In NR, up to four PUCCH resource sets can be configured to a UE. A PUCCH resource set with pucch-ResourceSetId=0 can have up to 32 PUCCH resources while for PUCCH resource sets with pucch-ResourceSetId=1 to 3, each set can have up to 8 PUCCH resources. A UE determines the PUCCH resource set in a slot based on the number of aggregated UCI (Uplink Control Information) bits to be sent in the slot. The UCI bits consists of HARQ ACK/NACK, scheduling request (SR), and channel state information (CSI) bits.

For a PUCCH transmission with HARQ-ACK information, a UE determines a PUCCH resource after determining a PUCCH resource set. The PUCCH resource determination is based on a 3-bit PUCCH resource indicator (PRI) field in a DL DCI format.

If more than one DL DCI formats are received in the case of CA and/or TDD, the PUCCH resource determination is based on a PRI field in the last DCI among the multiple received DL DCIs that the UE detects. The multiple received DCIs have a value of a PDSCH-to-HARQ_feedback timing indicator field indicating a same slot for the PUCCH transmission. For PUCCH resource determination, the detected DCI formats are first indexed in an ascending order across serving cell indexes for a same PDCCH monitoring occasion and are then indexed in an ascending order across PDCCH monitoring occasion indexes.

### NR Type 2 HARQ -ACK Codebook

NR Rel-15 supports two types of HARQ codebooks, i.e., semi-static (type 1) and dynamic (type 2) codebooks, for HARQ Ack multiplexing for multiple serving cells in case of carrier aggregation (CA) or multiple DL slots in case of TDD. A UE can be configured to use either one of the codebooks for HARQ Ack/Nack feedback.

Type 1 HARQ codebook (CB) is determined based on a set of semi-statically configured parameters. The codebook size corresponds to the maximum number of HARQ Ack bits that may need to be fed back and it does not change dynamically. Therefore, the feedback overhead can be large.

Unlike Type 1 HARQ codebook, the size of Type 2 HARQ codebook changes dynamically based on the actual number of PDSCH receptions or SPS PDSCH releases or SCell dormancy associated with a same PUCCH resource for HARQ Ack feedback. For this purpose, a counter DAI (Downlink Assignment Indicator) field in the DCIs and in case of DCI format 1-1 and DCI format 1_2, also a total DAI field (if more than one serving cell are configured) are defined.

A value of the counter DAI field in DCI formats denotes the accumulative number of {serving cell, PDCCH monitoring occasion}-pair(s) in which PDSCH reception(s), SPS PDSCH release, or SCell dormancy associated with the DCI formats that is present up to the current serving cell and current PDCCH monitoring occasion, first in ascending order of serving cell index *c* and then in ascending order of PDCCH monitoring occasion index m, where 0 ≤ *m < M* and M is total number of PDCCH monitoring occasions.

The value of the total DAI, when present, in DCI formats denotes the total number of {serving cell, PDCCH monitoring occasion}-pair(s) in which PDSCH reception(s) or SPS PDSCH release or SCell dormancy associated with the DCI formats that is present, up to the current PDCCH monitoring occasion m and is updated from PDCCH monitoring occasion to PDCCH monitoring occasion.

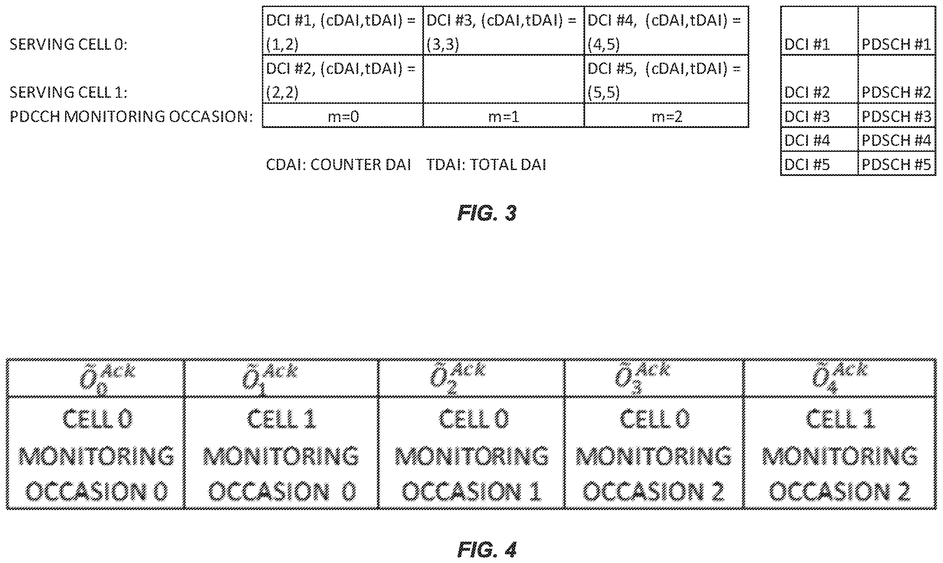

An example is shown Figure 3, where a UE is configured with two serving cells and three PDCCH monitoring occasions. The corresponding counter DAI and total DAI values in each scheduled DCI are shown. The counter DAI is updated after every scheduled DCI while total DAI is only updated every monitoring occasion. Since only two bits are allocated for either counter DAI or total DAI in DCI, the actual DAI values are wrapped round with a modulo 4 operation. A UE can figure out the actual number of DCIs transmitted even though some DCIs are undetected, if the undetected consecutive DCIs are smaller than four.

For HARQ-ACK information transmitted in a PUCCH in slot *n,* the UE determines the HARQ-ACK information bits, ${{o}^{˜}}_{0}^{ACK} , {{o}^{˜}}_{1}^{ACK} , … , {{o}^{˜}}_{{O}^{ACK} - 1}^{ACK}$*,* associated with dynamic scheduled PDSCHs or SPS PDSCH release or SCell dormancy, in the order of first in ascending order of serving cell index and then in ascending order of PDCCH monitoring occasion index *m*. For the example shown in Figure 3 and if one TB is enabled for both cells, the ${{o}^{˜}}_{0}^{ACK} , {{o}^{˜}}_{1}^{ACK} , … , {{o}^{˜}}_{{O}^{ACK} - 1}^{ACK}$ (where *O*_{ACK} = 5) are shown in Figure 4.

Document WO 2021/003259 A1 may be construed to disclose a wireless device that receives downlink control information (DCIs), in a control channel monitoring occasion, scheduling transport blocks (TBs) in downlink time slots. Each DCI of the DCIs schedules a respective TB, of the TBs, in a downlink time slot of the downlink time slots; and indicates a same uplink time slot for transmission of acknowledgement information of the respective TB. A determination is made, in an acknowledgement codebook, locations of acknowledgement information of the TBs based on starting times of the downlink time slots. The acknowledgement codebook is transmitted.

### PDCCH repetition

PDSCH transmission with multiple panels or transmission points (TRPs) has been introduced in NR Rel-16, in which a transport block may be repeated over multiple TRPs to increase PDSCH reliability.

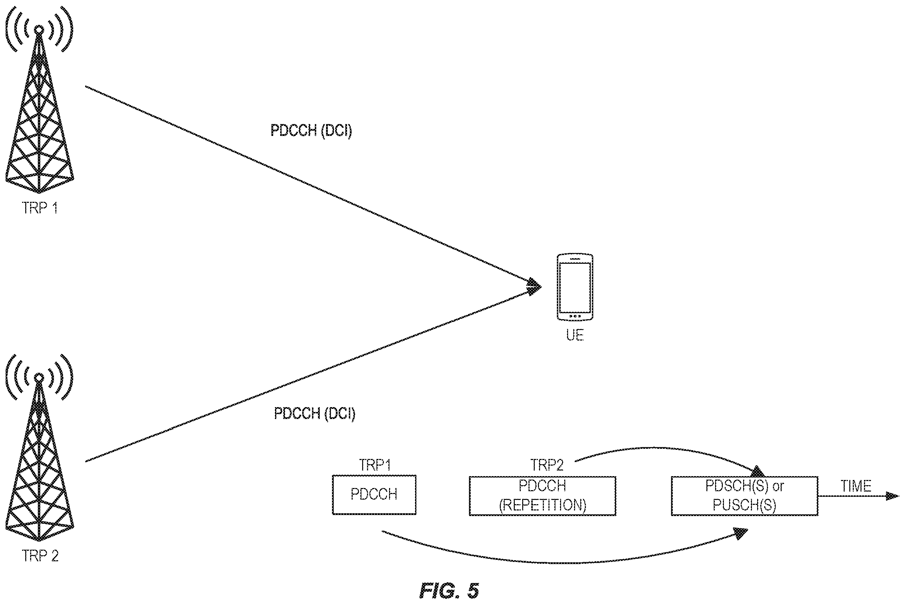

In NR Rel-17, it has been proposed to enhance PDCCH reliability with multiple TRPs by repeating a PDCCH over different TRPs. An example is shown in Figure 5, where a PDCCH is repeated over two TRPs at different times, both containing the same DCI. The DCI can be a DL DCI or a UL DCI.

The PDCCH are repeated in two PDCCH candidates each associated with one of the two TRPs. The two PDCCH candidates are linked, i.e., the location of one PDCCH candidate can be obtained from the other PDCCH candidate. When performing PDCCH detection, a UE may detect PDCCH individually in each PDCCH candidate or jointly by soft combining of the two linked PDCCH candidates.

Improved systems and methods for codebook determination are needed.

### Summary

Systems and methods for codebook determination are provided herein. In some embodiments, a method performed by a wireless device for constructing a codebook includes: defining a first Physical Downlink Control Channel (PDCCH) occasion among multiple PDCCH occasions associated with a PDCCH; identifying the first PDCCH occasion for each detected Downlink Control Information (DCI); and constructing a codebook based on the first PDCCH occasion of all detected PDCCHs with a counter field in the corresponding DCIs. In this way, Type 2 Hybrid Automatic Repeat Request (HARQ) Acknowledgement (ACK) codebook construction is enabled in the presence of PDCCH repetitions with minimum specification changes.

Certain aspects of the present disclosure and their embodiments may provide solutions to the aforementioned or other challenges. A method is proposed to construct the codebook in the presence of PDCCH repetitions. The method comprises one or more of: defining a first PDCCH occasion among multiple PDCCH occasions associated with a PDCCH; identifying at the UE the first PDCCH occasion for each detected DCI; and constructing a codebook based on the first PDCCH occasion of all detected PDCCHs with a counter field in the corresponding DCIs. In some embodiments, the codebook comprises a Type 2 HARQ ACK codebook. In some embodiments, the counter field comprises a counter DAI field.

According to the present disclosure, there are provided methods, computer-readable media, a wireless device and a base station according to the independent claims. Further developments are set forth in the dependent claims.

### Brief Description of the Drawings

The accompanying drawing figures incorporated in and forming a part of this specification illustrate several aspects of the disclosure, and together with the description serve to explain the principles of the disclosure.
Figure 1 illustrates data scheduling in New Radio (NR) is typically in slot basis, with a 14-symbol slot, where the first two symbols contain Physical Downlink Control Channel (PDCCH) and the rest contains physical shared data channel, either Physical Downlink Shared Channel (PDSCH) or Physical Uplink Shared Channel (PUSCH);
Figure 2 illustrates the basic NR physical time-frequency resource grid where only one resource block (RB) within a 14-symbol slot is shown;
Figure 3 illustrates an example where a User Equipment (UE) is configured with two serving cells and three PDCCH monitoring occasions;
Figure 4 illustrates the example of Figure 3 if one TB is enabled for both cells;
Figure 5 illustrates an example where a PDCCH is repeated over two Transmission/Reception Points (TRPs) at different times, both containing the same Downlink Control Information (DCI);
Figure 6 illustrates one example of a cellular communications system in which embodiments of the present disclosure may be implemented;
Figure 7 illustrates an example where there are three DCIs transmitted in two serving cells and two PDCCH monitoring occasions, according to some embodiments of the present disclosure;
Figure 8 illustrates an example where Type 2 HARQ codebook is constructed based on the determined first PDCCH occasions, according to some embodiments of the present disclosure;
Figure 9 illustrates the resulting HARQ ACK information bits assuming that only a single codeword is configured in the two serving cells, according to some embodiments of the present disclosure;
Figure 10 illustrates an example where there are three DCIs transmitted in two serving cells and two PDCCH monitoring occasions, according to some embodiments of the present disclosure;
Figure 11 illustrates an example where the Type 2 HARQ codebook is constructed based on the determined last PDCCH occasions, according to some embodiments of the present disclosure;
Figure 12 illustrates the resulting HARQ ACK information bits assuming that only a single codeword is configured in the two serving cells, according to some embodiments of the present disclosure;
Figures 13A and 13B illustrate methods performed by a wireless device for constructing a codebook, according to some embodiments of the present disclosure;
Figures 14A and 14B illustrate methods performed by a base station for constructing a codebook, according to some embodiments of the present disclosure;
Figures 15 through 17 are schematic block diagrams of example embodiments of a radio access node, according to some embodiments of the present disclosure;
Figures 18 and 19 are schematic block diagrams of a UE, according to some embodiments of the present disclosure;
Figure 20 illustrates an example embodiment of a communication system in which embodiments of the present disclosure may be implemented;
Figure 21 illustrates example embodiments of the host computer, base station, and UE of Figure 16, according to some embodiments of the present disclosure; and
Figures 22 through 25 are flow charts that illustrate example embodiments of methods implemented in a communication system such as that of Figure 20.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing a Access and Mobility Management Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the RAN or the core network of a cellular communications network/system.

**Transmission/Reception Point (TRP):** In some embodiments, a TRP may be either a network node, a radio head, a spatial relation, or a Transmission Configuration Indicator (TCI) state. A TRP may be represented by a spatial relation or a TCI state in some embodiments. In some embodiments, a TRP may be using multiple TCI states. In some embodiments a TRP may be a part of the gNB transmitting and receiving radio signals to/from UE according to physical layer properties and parameters inherent to that element. In some embodiments, in Multiple Transmit/Receive Point (multi-TRP) operation, a serving cell can schedule UE from two TRPs, providing better PDSCH coverage, reliability and/or data rates. There are two different operation modes for multi-TRP: single- Downlink Control Information (DCI) and multi-DCI. For both modes, control of uplink and downlink operation is done by both physical layer and MAC. In single-DCI mode, UE is scheduled by the same DCI for both TRPs and in multi-DCI mode, UE is scheduled by independent DCIs from each TRP.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

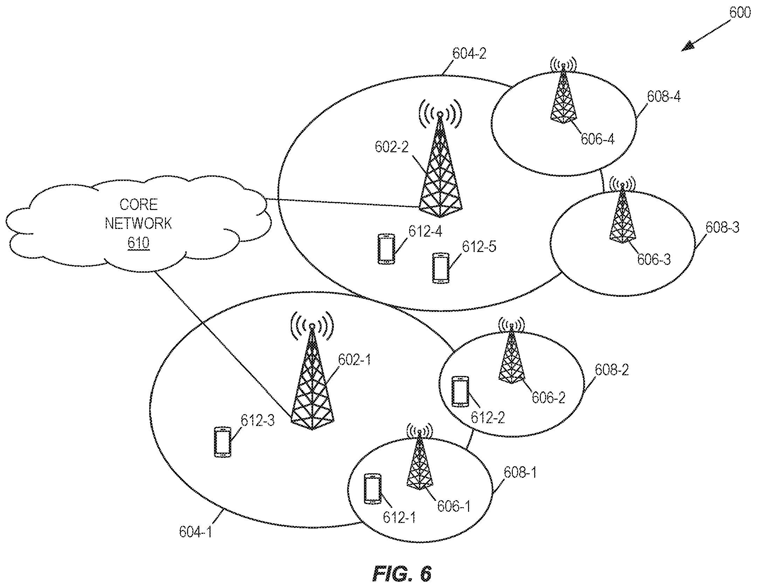

Figure 6 illustrates one example of a cellular communications system 600 in which embodiments of the present disclosure may be implemented. In the embodiments described herein, the cellular communications system 600 is a 5G system (5GS) including a Next Generation RAN (NG-RAN) and a 5G Core (5GC). In this example, the RAN includes base stations 602-1 and 602-2, which in the 5GS include NR base stations (gNBs) and optionally next generation eNBs (ng-eNBs) (e.g., LTE RAN nodes connected to the 5GC), controlling corresponding (macro) cells 604-1 and 604-2. The base stations 602-1 and 602-2 are generally referred to herein collectively as base stations 602 and individually as base station 602. Likewise, the (macro) cells 604-1 and 604-2 are generally referred to herein collectively as (macro) cells 604 and individually as (macro) cell 604. The RAN may also include a number of low power nodes 606-1 through 606-4 controlling corresponding small cells 608-1 through 608-4. The low power nodes 606-1 through 606-4 can be small base stations (such as pico or femto base stations) or Remote Radio Heads (RRHs), or the like. Notably, while not illustrated, one or more of the small cells 608-1 through 608-4 may alternatively be provided by the base stations 602. The low power nodes 606-1 through 606-4 are generally referred to herein collectively as low power nodes 606 and individually as low power node 606. Likewise, the small cells 608-1 through 608-4 are generally referred to herein collectively as small cells 608 and individually as small cell 608. The cellular communications system 600 also includes a core network 610, which in the 5G System (5GS) is referred to as the 5GC. The base stations 602 (and optionally the low power nodes 606) are connected to the core network 610.

The base stations 602 and the low power nodes 606 provide service to wireless communication devices 612-1 through 612-5 in the corresponding cells 604 and 608. The wireless communication devices 612-1 through 612-5 are generally referred to herein collectively as wireless communication devices 612 and individually as wireless communication device 612. In the following description, the wireless communication devices 612 are oftentimes UEs, but the present disclosure is not limited thereto.

There currently exist certain challenges. In the presence of Physical Downlink Control Channel (PDCCH) repetition, how to construct Type 2 Hybrid Automatic Repeat Request (HARQ) Acknowledgement (ACK) codebook is an issue. For instance, consider an example where PDCCH #1 scheduling a PDSCH is repeated in PDCCH monitoring occasions m=0 and m=1, and there are other PDSCHs scheduled by PDCCHs in PDCCH monitoring occasion m=0, assume that PDCCH #1 is only detected in PDCCH monitoring occasion m=1. If the existing procedure for Type 2 HARQ ACK codebook construction is applied (i.e., the HARQ ACK bits are arranged first in ascending order of serving cell index and then in ascending order of PDCCH monitoring occasion index), the counter DAI and total DAI in DCI #1 in PDCCH monitoring occasion m=1 would result in an incorrect number of HARQ ACK bits and also incorrect mapping between the PDSCHs and the HARQ ACK bits. Improved systems and methods for codebook determination are needed.

Systems and methods for codebook determination are provided herein. In some embodiments, a method performed by a wireless device for constructing a codebook includes: defining a first PDCCH occasion among multiple PDCCH occasions associated with a PDCCH; identifying the first PDCCH occasion for each detected DCI; and constructing a codebook based on the first PDCCH occasion of all detected PDCCHs with a counter field in the corresponding DCIs. In this way, Type 2 HARQ ACK codebook construction is enabled in the presence of PDCCH repetitions with minimum specification changes.

In one embodiment, the counter DAI in a DCI is incremented only at the first PDCCH occasion in case of PDCCH repetition. If a PDCCH is repeated in two PDCCH monitoring occasions, the first PDCCH occasion is defined as the one in the PDCCH monitoring occasion that occurs early in time. Only the first PDCCH occasion is considered for incrementing counter DAI and total DAI in subsequent DCIs.

The PDCCH monitoring occasions described in this invention disclosure can be either in a slot or a monitoring span. The different PDCCH monitoring occasions can be in different slots/monitoring spans or the same slot/monitoring span.

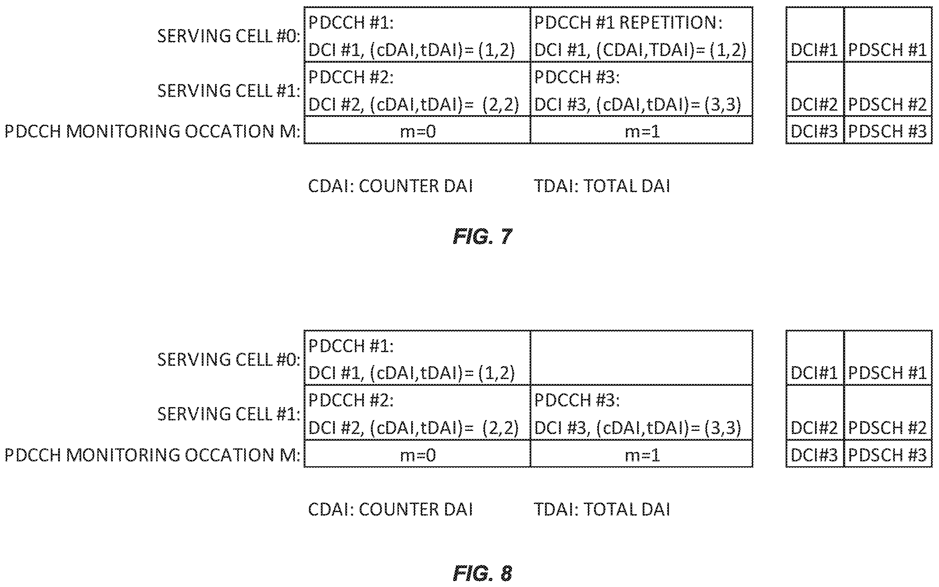

An example is shown in Figure 7, where there are three DCIs transmitted in two serving cells and two PDCCH monitoring occasions. The DCIs are used to schedule three PDSCHs, PDSCHs #1 to #3. It is assumed that the HARQ-Acks associated with the PDSCHs are to be transmitted in a same PUCCH or PUSCH in an uplink slot. DCI#1 is carried in PDCCH #1, which is repeated in both PDCCH monitoring occasions m=0 and m=1. In this case, the first PDCCH occasion of PDCCH #1 is the one in PDCCH monitoring occasion m=0 and the second PDCCH occasion of PDCCH #1 is in PDCCH monitoring occasions m=1. The counter DAI and the total DAI in DCI #1 are incremented in the first PDCCH occasion in PDCCH monitoring occasions m=0. In the second occasion in PDCCH monitoring occasions m=1, the same DCI #1 is transmitted, thus the counter and total DAIs are unchanged. For DCI #3, its counter DAI and total DAI are incremented without considering the PDCCH #1 repetition, i.e., the second occasion of PDCCH #1 in PDCCH monitoring occasion m=1 is not counted.

### Type 2 HARQ codebook construction in presence of PDCCH repetitions

In one embodiment, the counter DAI in a DCI is incremented only at the first PDCCH occasion in case of PDCCH repetition. If a PDCCH is repeated in two PDCCH monitoring occasions, the first PDCCH occasion is defined as the one in the PDCCH monitoring occasion that occurs early in time. Only the first PDCCH occasion is considered for incrementing counter DAI and total DAI in subsequent DCIs.

If a PDCCH is repeated within a same PDCCH monitoring occasion in different PDCCH candidates of a same or different CORESETs or in a same or different SS sets, the first PDCCH occasion can be defined as one of
- a linked PDCCH candidate with a lower (or higher) PDCCH candidate index,
- a linked PDCCH candidate in a CORESET with a lower (or higher) CORESET ID, or
- a linked PDCCH candidate in a SS set with a lower (or higher) SS set ID.

In the UE side, for each detected DCI, the associated first PDCCH occasion is determined. The existing Type 2 HARQ codebook procedure is then applied by considering only the determined first PDCCH occasion.

Using the example shown in Figure 7, let us assume DCI#1 is detected in the second PDCCH occasion in PDCCH monitoring occasions m=1 but not in the first occasion in PDCCH monitoring occasion m=0. Both DCI #2 and DCI #3 are detected. Based on the linkage of PDCCH candidates for PDCCH repetition, the UE can determine that the first PDCCH occasion for DCI#1 is in PDCCH monitoring occasions m=0. For DCIs #2 and #3, they are not repeated and thus the corresponding first occasions are the ones over which they are detected. The Type 2 HARQ codebook is then constructed based on the determined first PDCCH occasions as shown in Figure 8.

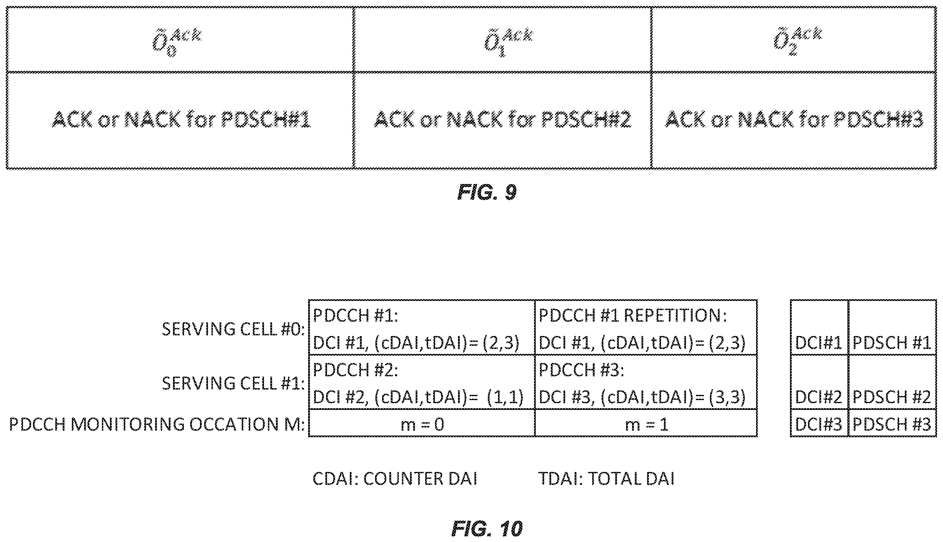

Assuming that only a single codeword is configured in the two serving cells, the resulting HARQ ACK information bits ${{o}^{˜}}_{0}^{ACK} , {{o}^{˜}}_{1}^{ACK} , ⋯ , {{o}^{˜}}_{{O}_{ACK} - 1}^{ACK}$, for a total number of *O*_{ACK} = 3 HARQ-ACK information bits in a PUCCH, are shown in Figure 9.

The embodiment may be described by changes (highlighted in bold) in the existing pseudo code for Type 2 HARQ-Ack codebook below.

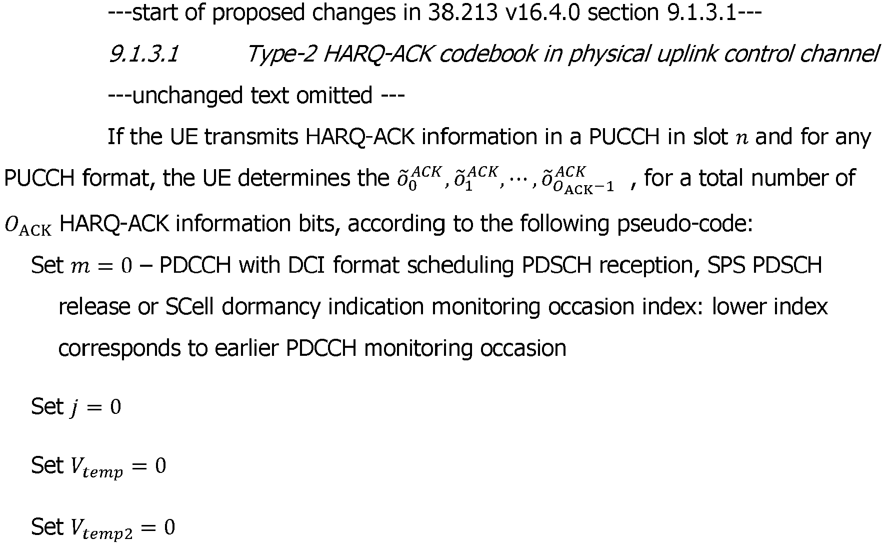

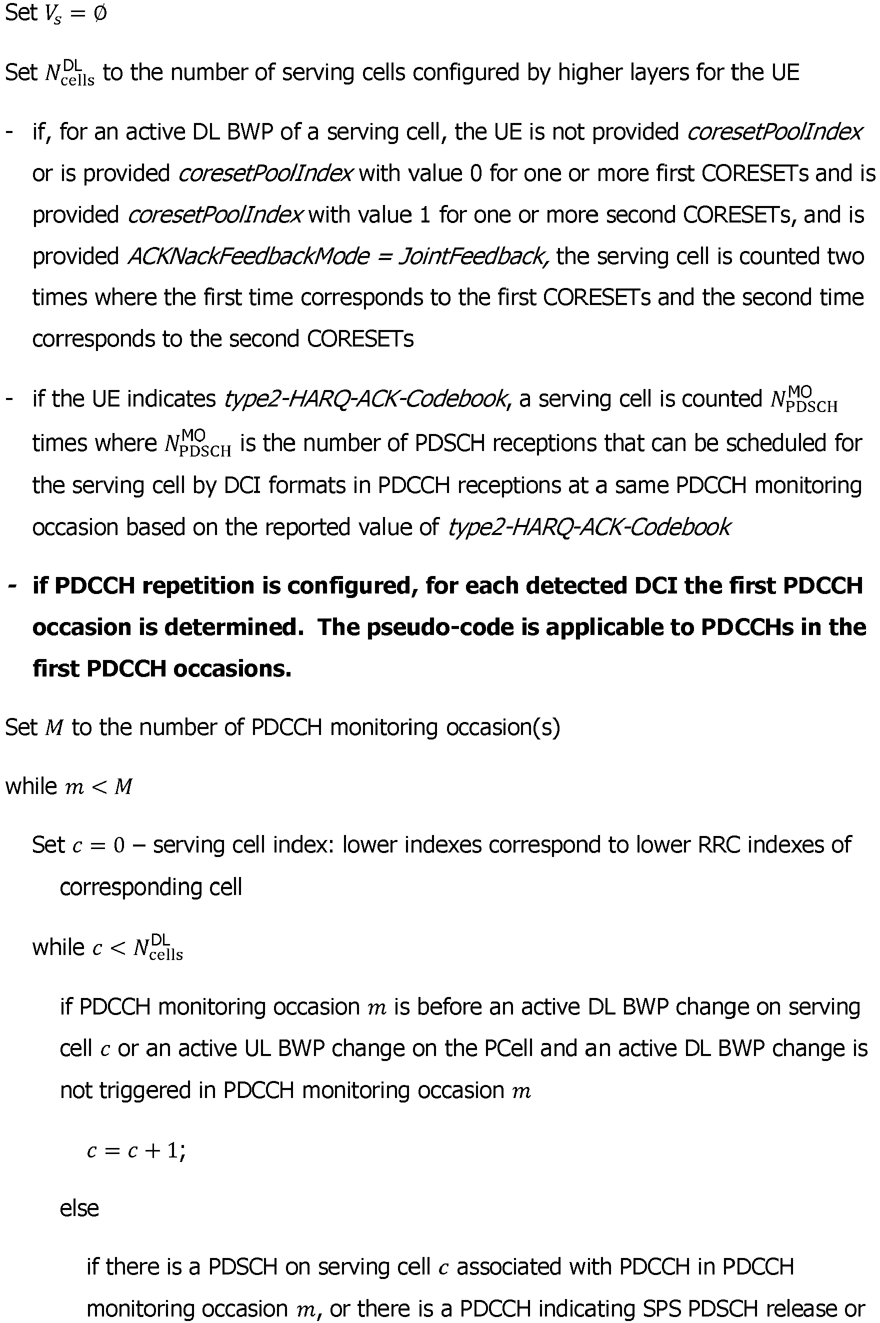

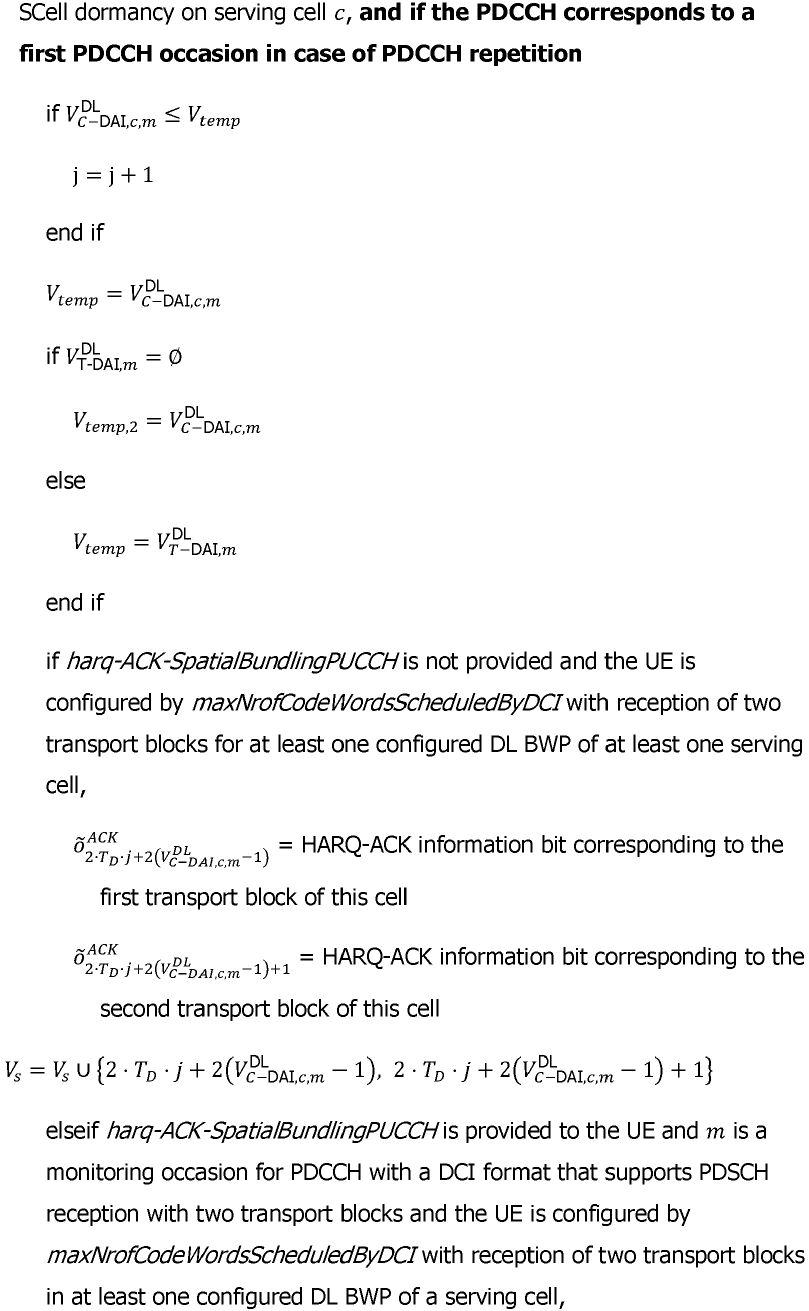

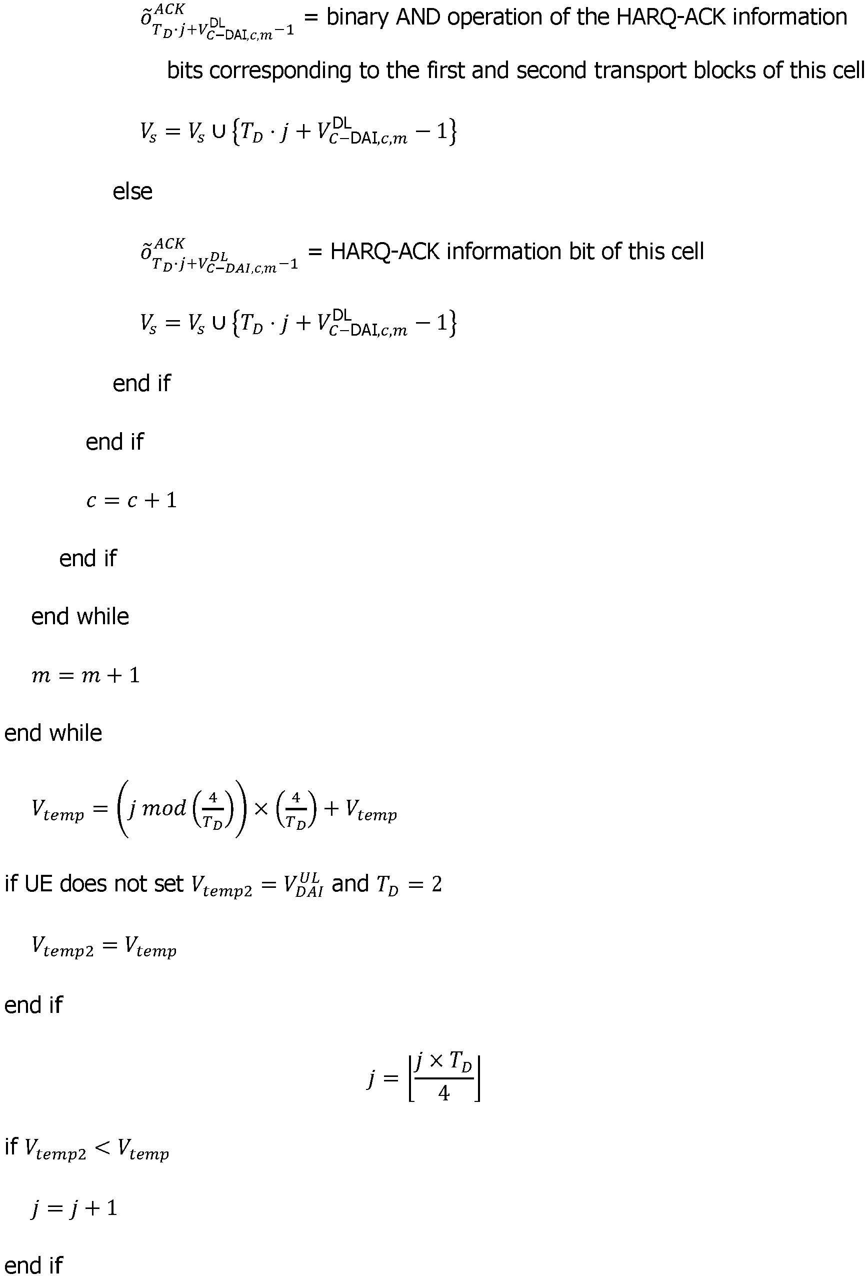

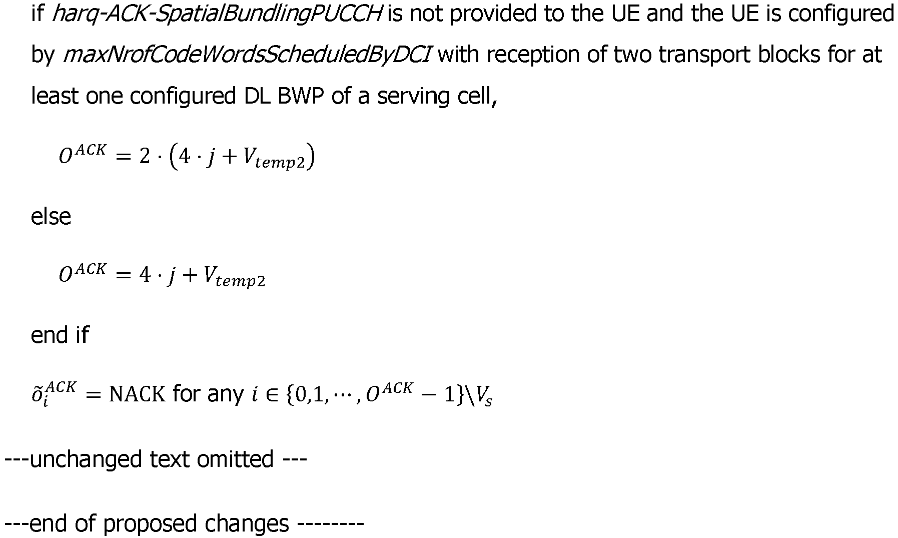

### Alternative embodiment for Type 2 HARQ codebook construction in presence of PDCCH repetitions

In an alternative embodiment, the counter DAI in a DCI is incremented only at the last PDCCH occasion in case of PDCCH repetition. If a PDCCH is repeated in two PDCCH monitoring occasions, the last PDCCH occasion is defined as the one in the PDCCH monitoring occasion that occurs latest in time. Only the last PDCCH occasion is considered for incrementing counter DAI and total DAI.

An example is shown in Figure 10, where there are three DCIs transmitted in two serving cells and two PDCCH monitoring occasions. The DCIs are used to schedule three PDSCHs, PDSCHs #1 to #3. DCI#1 is carried in PDCCH #1, which is repeated in both PDCCH monitoring occasions m=0 and m=1. In this case, the last PDCCH occasion of PDCCH #1 is the one in PDCCH monitoring occasion m=1 and the first PDCCH occasion of PDCCH #1 is in PDCCH monitoring occasions m=0. The counter DAI and the total DAI in DCI #1 are incremented in the last PDCCH occasion in PDCCH monitoring occasions m=1. In the first occasion in PDCCH monitoring occasions m=0, the same DCI #1 is transmitted, thus the counter and total DAIs are unchanged. For DCI #2, its counter DAI and total DAI are incremented without considering the PDCCH #1 repetition, i.e., the first occasion of PDCCH #1 in PDCCH monitoring occasion m=0 is not counted.

In the UE side, for each detected DCI, the associated last PDCCH occasion is determined. The existing Type 2 HARQ codebook procedure is then applied by considering only the determined last PDCCH occasions.

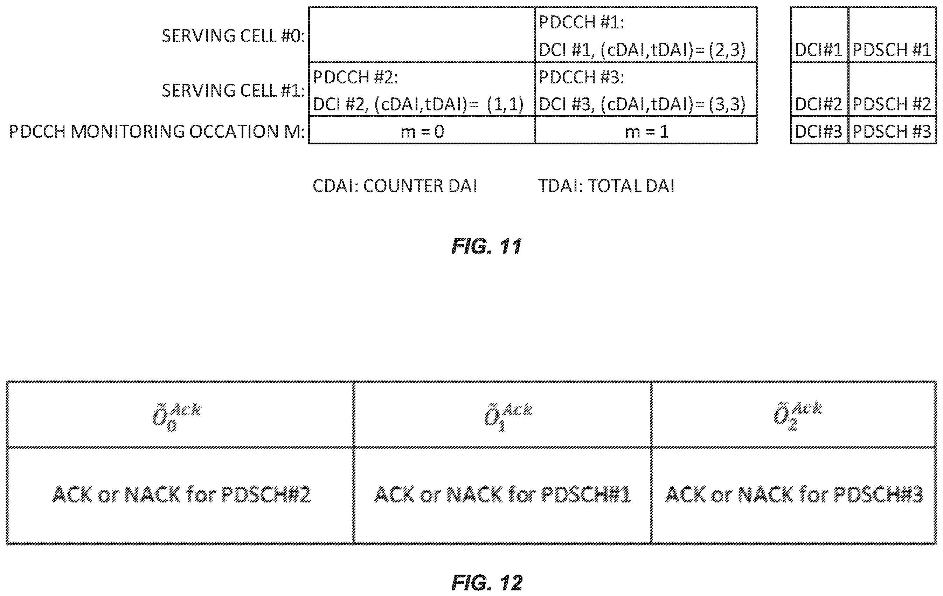

Using the example shown in Figure 10, let us assume DCI#1 is detected in the first PDCCH occasion in PDCCH monitoring occasions m=0 but not in the last occasion in PDCCH monitoring occasion m=1. Both DCI #2 and DCI #3 are also detected. Based on the linkage of PDCCH candidates for PDCCH repetition, the UE can determine that the last PDCCH occasion for DCI#1 is in PDCCH monitoring occasions m=1. For DCIs #2 and #3, they are not repeated and thus the corresponding last occasions are the ones over which they are detected. The Type 2 HARQ codebook is then constructed based on the determined last PDCCH occasions as shown in Figure 11.

Assuming that only a single codeword is configured in the two serving cells, the resulting HARQ ACK information bits ${{o}^{˜}}_{0}^{ACK} , {{o}^{˜}}_{1}^{ACK} , ⋯ , {{o}^{˜}}_{{O}_{ACK} - 1}^{ACK}$, for a total number of *O*_{ACK} = 3 HARQ-ACK information bits in a PUCCH, are shown in Figure 12.

The embodiment may be described by changes (highlighted in bold) in the existing pseudo code for Type 2 HARQ-Ack codebook below.

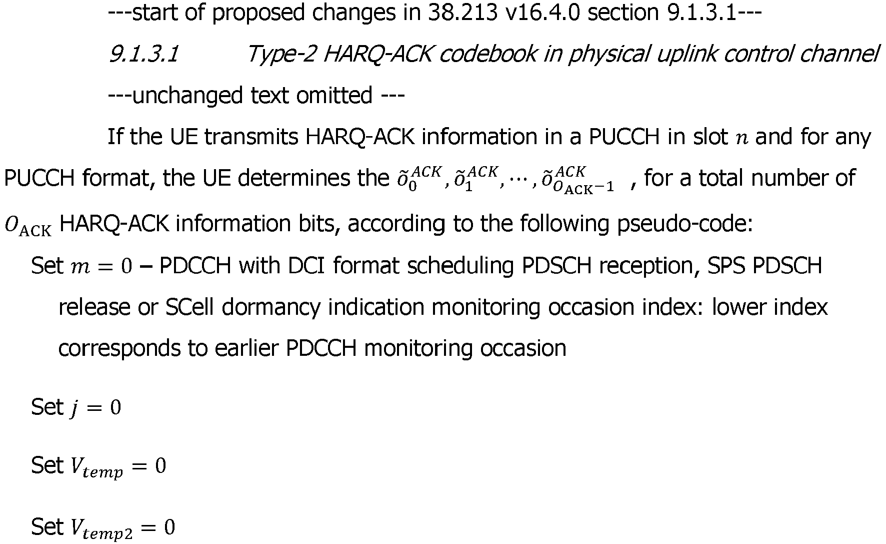

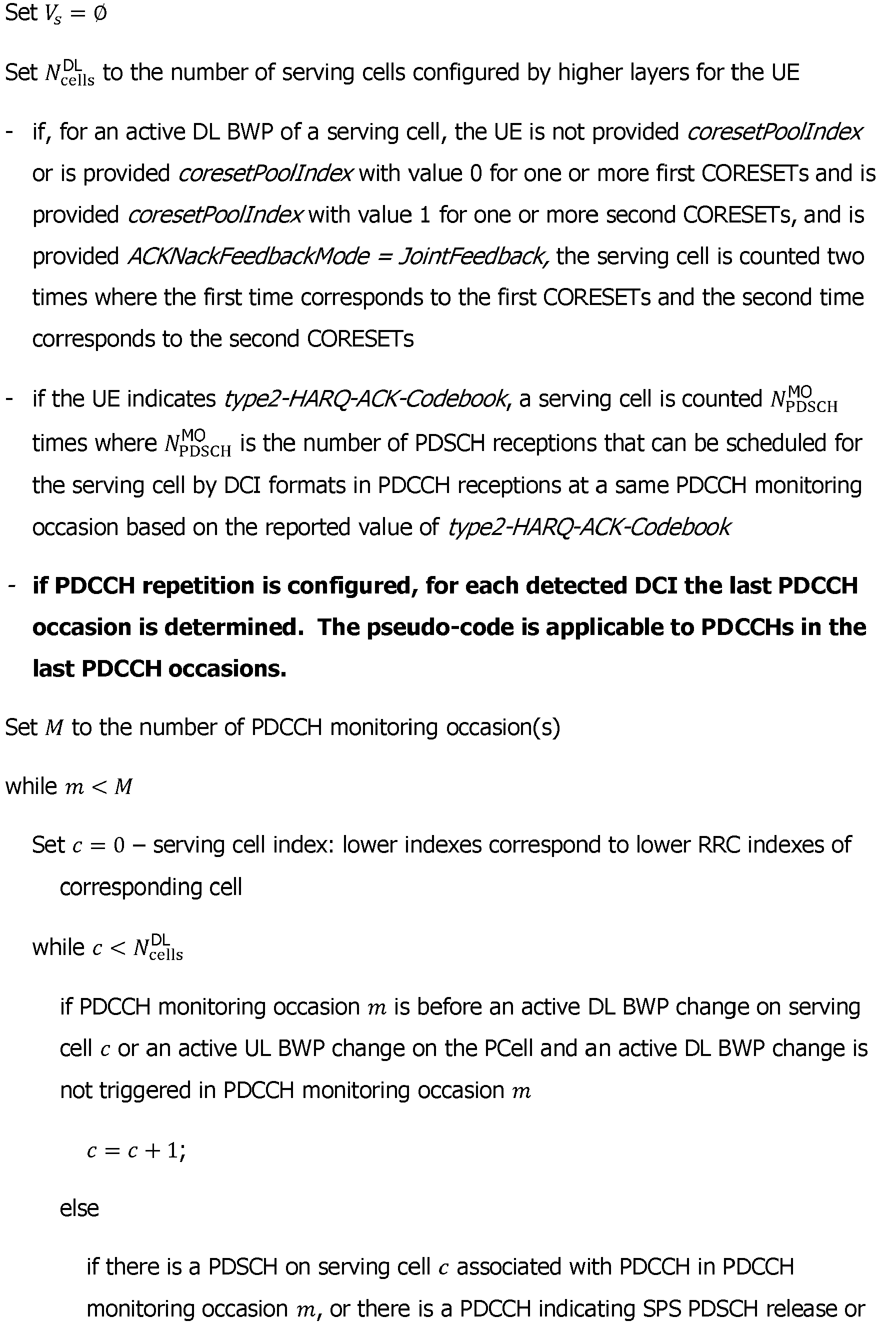

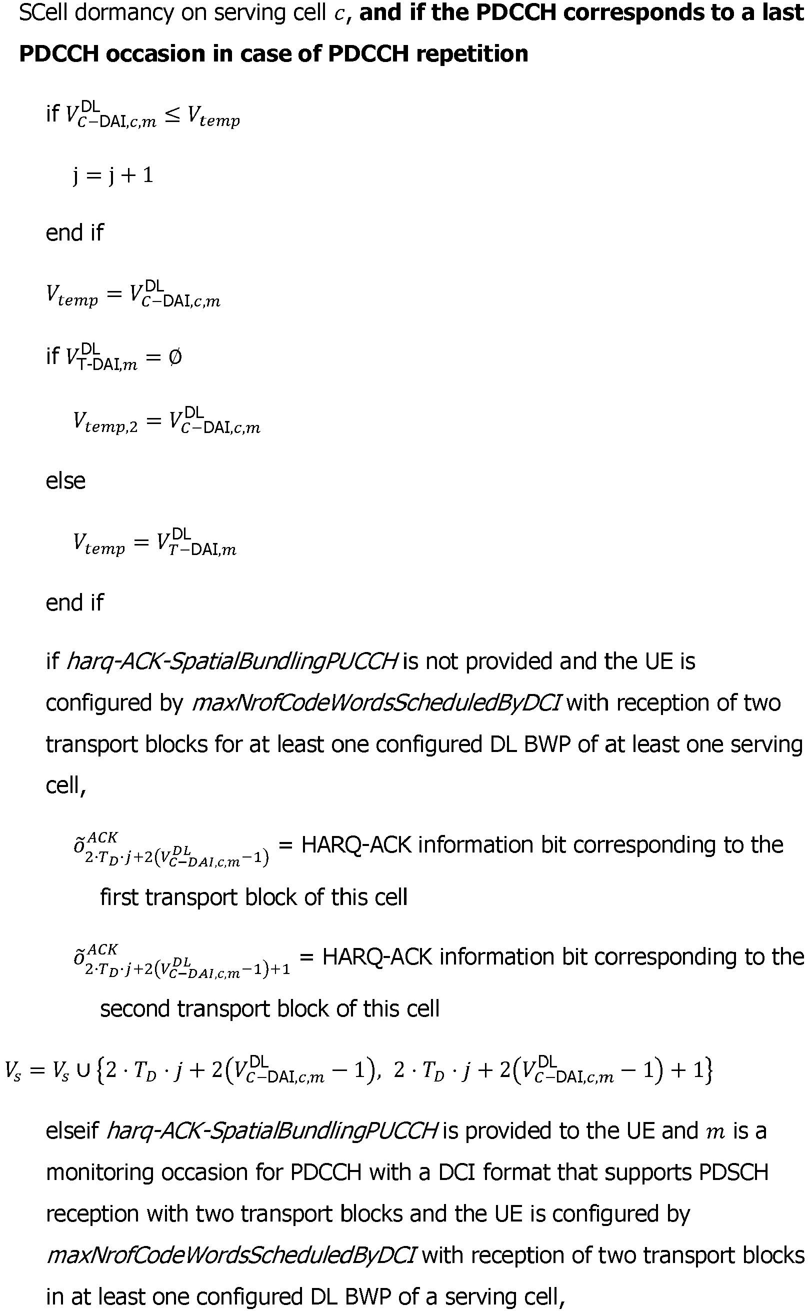

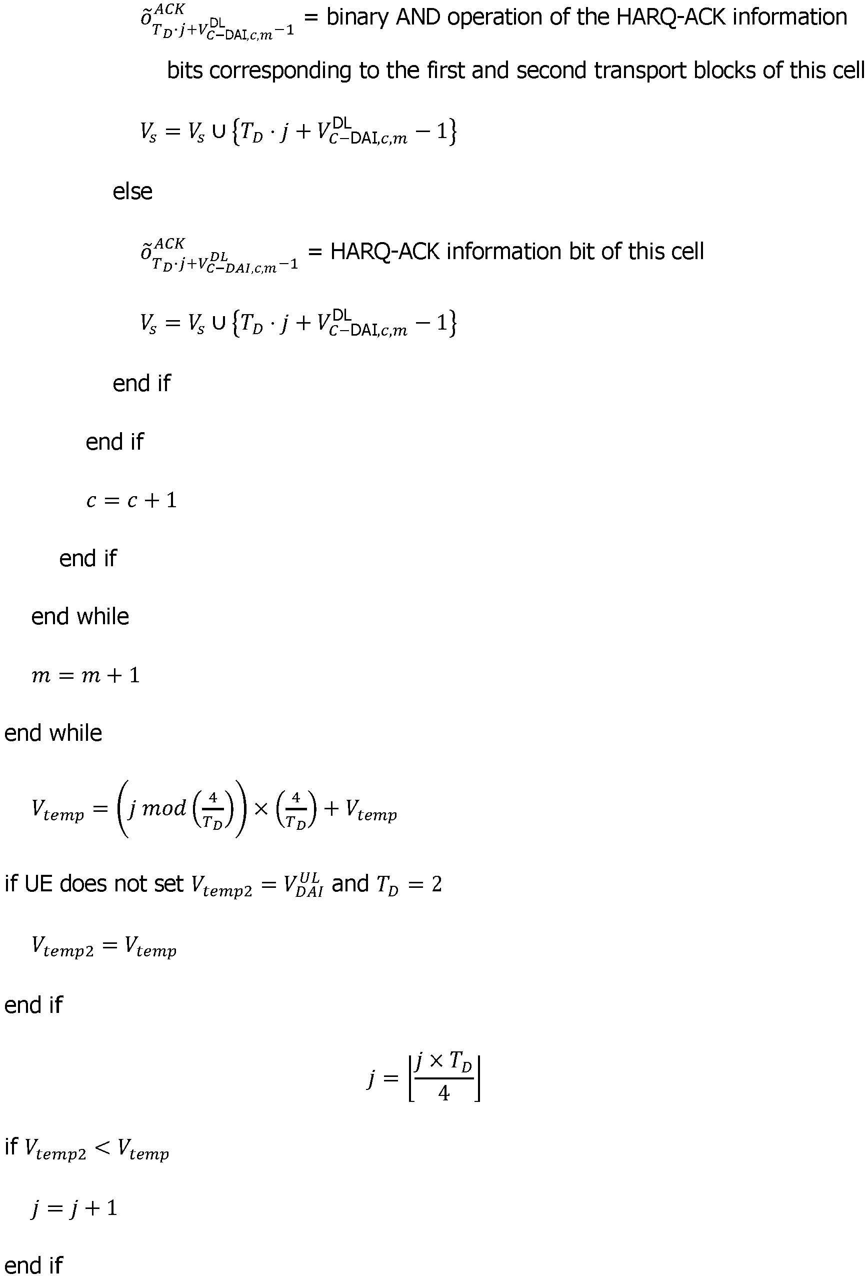

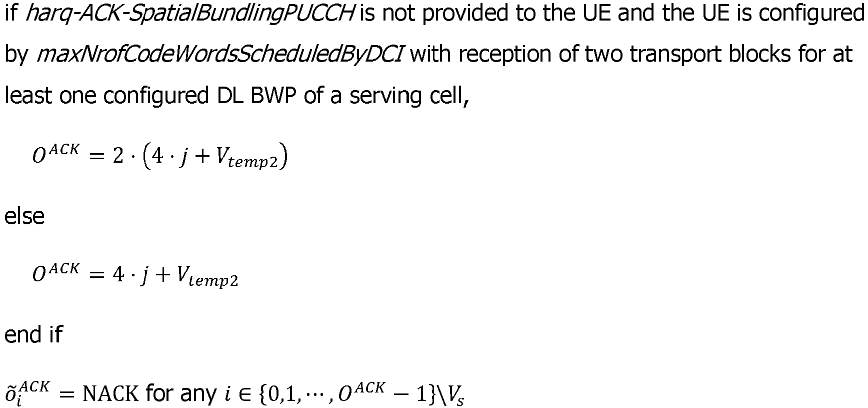

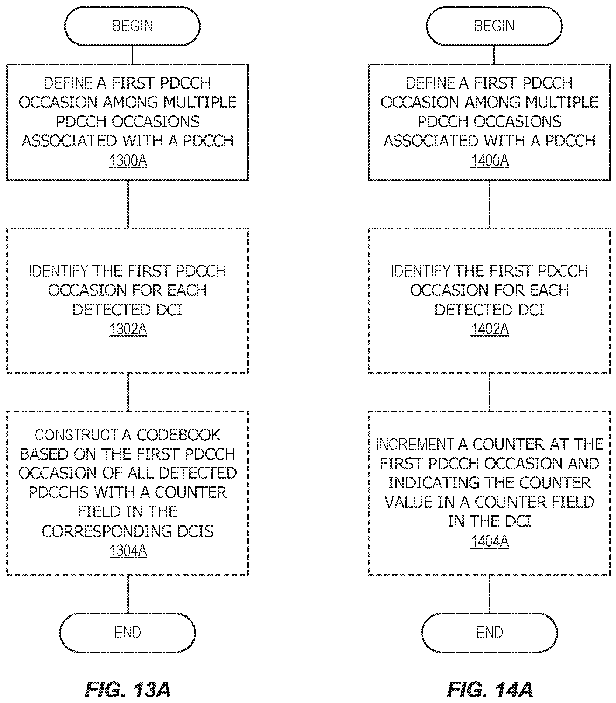

Figure 13A illustrates a method performed by a wireless device for constructing a codebook. The method includes one or more of: defining (step 1300A) a first PDCCH occasion among multiple PDCCH occasions associated with a PDCCH; identifying (step 1302A) the first PDCCH occasion for each detected DCI; and constructing (step 1304A) a codebook based on the first PDCCH occasion of all detected PDCCHs with a counter field in the corresponding DCIs.

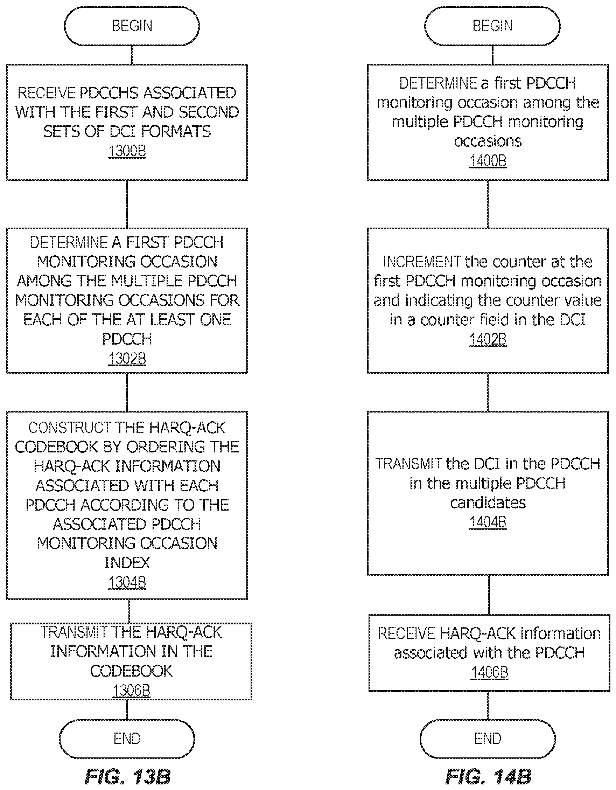

Figure 13B illustrates a method performed by a wireless device for constructing a codebook. The method includes: receiving PDCCHs associated with the first and second sets of DCI formats (step 1300B); determining a first PDCCH monitoring occasion among the multiple PDCCH monitoring occasions for each of the at least one PDCCH (step 1302B); constructing the HARQ-ACK codebook by ordering the HARQ-ACK information associated with each PDCCH according to the associated PDCCH monitoring occasion index, wherein for each of the at least one PDCCH the associated PDCCH monitoring occasion is the first PDCCH monitoring occasion (step 1304B); and transmitting, to the base station, the HARQ-ACK information in the codebook (step1306B).

Figure 14A illustrates a method performed by a base station for constructing a codebook. The method includes one or more of: defining (step 1400A) a first PDCCH occasion among multiple PDCCH occasions associated with a PDCCH; identifying (step 1402A) the first PDCCH occasion for each DCI; and increment (step 1404A) a counter based on the first PDCCH occasion of all PDCCHs with a counter field in the corresponding DCIs.

Figure 14B illustrates a method performed by a base station for constructing a codebook. The method includes: determining a first PDCCH monitoring occasion among the multiple PDCCH monitoring occasions (step 1400B); incrementing the counter at the first PDCCH monitoring occasion and indicating the counter value in a counter field in the DCI (step 1402B); transmitting, to the wireless device, the DCI in the PDCCH in the multiple PDCCH candidates (step 1404B); receiving, from the wireless device, HARQ-ACK information associated with the PDCCH (step 1406B).

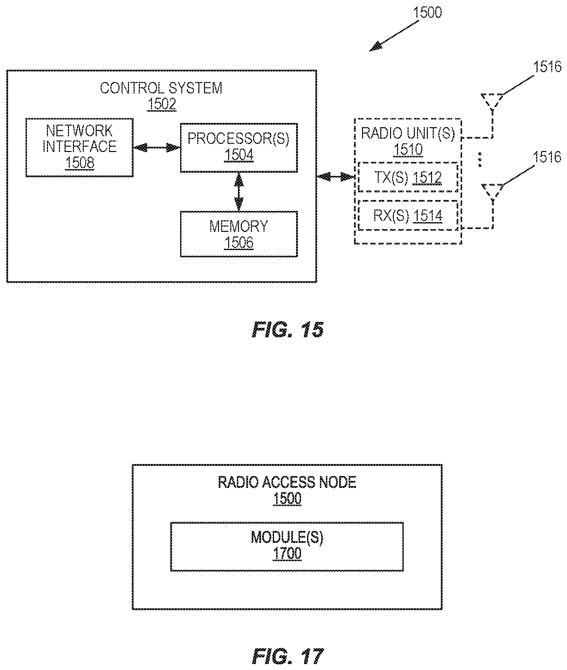

Figure 15 is a schematic block diagram of a radio access node 1500 according to some embodiments of the present disclosure. Optional features are represented by dashed boxes. The radio access node 1500 may be, for example, a base station 602 or 606 or a network node that implements all or part of the functionality of the base station 602 or gNB described herein. As illustrated, the radio access node 1500 includes a control system 1502 that includes one or more processors 1504 (e.g., Central Processing Units (CPUs), Application Specific Integrated Circuits (ASICs), Field Programmable Gate Arrays (FPGAs), and/or the like), memory 1506, and a network interface 1508. The one or more processors 1504 are also referred to herein as processing circuitry. In addition, the radio access node 1500 may include one or more radio units 1510 that each includes one or more transmitters 1512 and one or more receivers 1514 coupled to one or more antennas 1516. The radio units 1510 may be referred to or be part of radio interface circuitry. In some embodiments, the radio unit(s) 1510 is external to the control system 1502 and connected to the control system 1502 via, e.g., a wired connection (e.g., an optical cable). However, in some other embodiments, the radio unit(s) 1510 and potentially the antenna(s) 1516 are integrated together with the control system 1502. The one or more processors 1504 operate to provide one or more functions of a radio access node 1500 as described herein. In some embodiments, the function(s) are implemented in software that is stored, e.g., in the memory 1506 and executed by the one or more processors 1504.

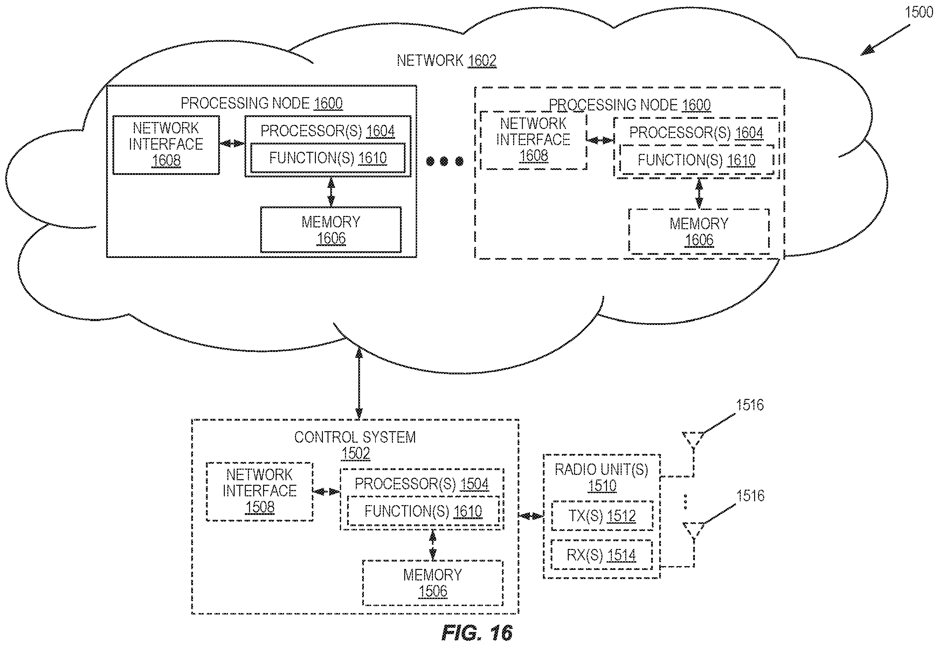

Figure 16 is a schematic block diagram that illustrates a virtualized embodiment of the radio access node 1500 according to some embodiments of the present disclosure. This discussion is equally applicable to other types of network nodes. Further, other types of network nodes may have similar virtualized architectures. Again, optional features are represented by dashed boxes.

As used herein, a "virtualized" radio access node is an implementation of the radio access node 1500 in which at least a portion of the functionality of the radio access node 1500 is implemented as a virtual component(s) (e.g., via a virtual machine(s) executing on a physical processing node(s) in a network(s)). As illustrated, in this example, the radio access node 1500 may include the control system 1502 and/or the one or more radio units 1510, as described above. The control system 1502 may be connected to the radio unit(s) 1510 via, for example, an optical cable or the like. The radio access node 1500 includes one or more processing nodes 1600 coupled to or included as part of a network(s) 1602. If present, the control system 1502 or the radio unit(s) are connected to the processing node(s) 1600 via the network 1602. Each processing node 1600 includes one or more processors 1604 (e.g., CPUs, ASICs, FPGAs, and/or the like), memory 1606, and a network interface 1608.

In this example, functions 1610 of the radio access node 1500 described herein are implemented at the one or more processing nodes 1600 or distributed across the one or more processing nodes 1600 and the control system 1502 and/or the radio unit(s) 1510 in any desired manner. In some particular embodiments, some or all of the functions 1610 of the radio access node 1500 described herein are implemented as virtual components executed by one or more virtual machines implemented in a virtual environment(s) hosted by the processing node(s) 1600. As will be appreciated by one of ordinary skill in the art, additional signaling or communication between the processing node(s) 1600 and the control system 1502 is used in order to carry out at least some of the desired functions 1610. Notably, in some embodiments, the control system 1502 may not be included, in which case the radio unit(s) 1510 communicate directly with the processing node(s) 1600 via an appropriate network interface(s).

In some embodiments, a computer program including instructions which, when executed by at least one processor, causes the at least one processor to carry out the functionality of radio access node 1500 or a node (e.g., a processing node 1600) implementing one or more of the functions 1610 of the radio access node 1500 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 17 is a schematic block diagram of the radio access node 1500 according to some other embodiments of the present disclosure. The radio access node 1500 includes one or more modules 1700, each of which is implemented in software. The module(s) 1700 provide the functionality of the radio access node 1500 described herein. This discussion is equally applicable to the processing node 1600 of Figure 16 where the modules 1700 may be implemented at one of the processing nodes 1600 or distributed across multiple processing nodes 1600 and/or distributed across the processing node(s) 1600 and the control system 1502.

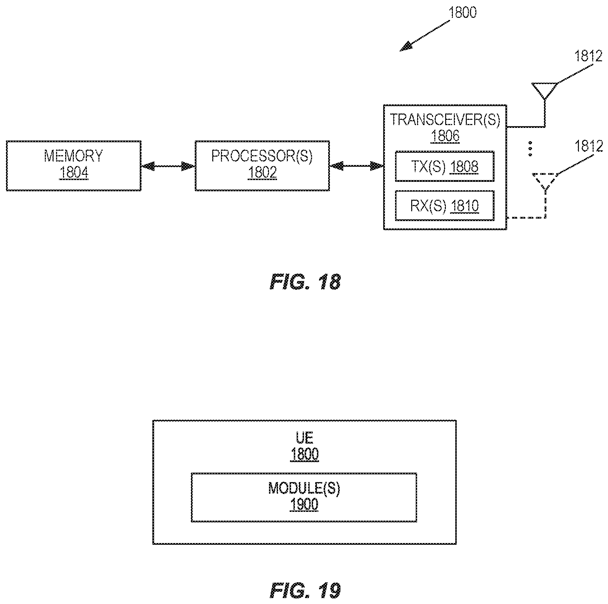

Figure 18 is a schematic block diagram of a wireless communication device 1800 according to some embodiments of the present disclosure. As illustrated, the wireless communication device 1800 includes one or more processors 1802 (e.g., CPUs, ASICs, FPGAs, and/or the like), memory 1804, and one or more transceivers 1806 each including one or more transmitters 1808 and one or more receivers 1810 coupled to one or more antennas 1812. The transceiver(s) 1806 includes radio-front end circuitry connected to the antenna(s) 1812 that is configured to condition signals communicated between the antenna(s) 1812 and the processor(s) 1802, as will be appreciated by on of ordinary skill in the art. The processors 1802 are also referred to herein as processing circuitry. The transceivers 1806 are also referred to herein as radio circuitry. In some embodiments, the functionality of the wireless communication device 1800 described above may be fully or partially implemented in software that is, e.g., stored in the memory 1804 and executed by the processor(s) 1802. Note that the wireless communication device 1800 may include additional components not illustrated in Figure 18 such as, e.g., one or more user interface components (e.g., an input/output interface including a display, buttons, a touch screen, a microphone, a speaker(s), and/or the like and/or any other components for allowing input of information into the wireless communication device 1800 and/or allowing output of information from the wireless communication device 1800), a power supply (e.g., a battery and associated power circuitry), etc.

In some embodiments, a computer program including instructions which, when executed by at least one processor, causes the at least one processor to carry out the functionality of the wireless communication device 1800 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 19 is a schematic block diagram of the wireless communication device 1800 according to some other embodiments of the present disclosure. The wireless communication device 1800 includes one or more modules 1900, each of which is implemented in software. The module(s) 1900 provide the functionality of the wireless communication device 1800 described herein.

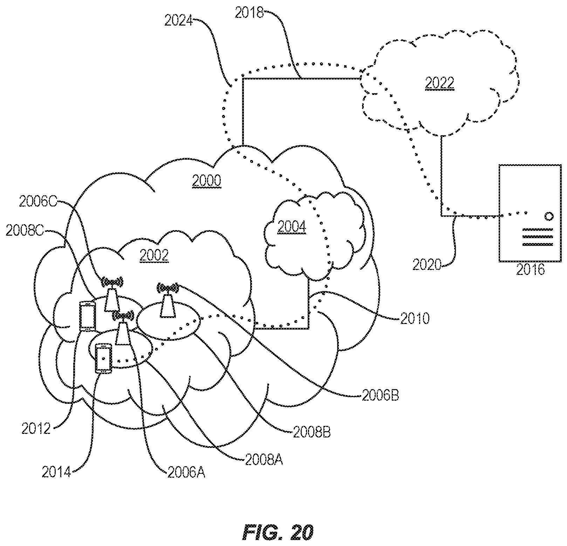

With reference to Figure 20, in accordance with an embodiment, a communication system includes a telecommunication network 2000, such as a 3GPP-type cellular network, which comprises an access network 2002, such as a RAN, and a core network 2004. The access network 2002 comprises a plurality of base stations 2006A, 2006B, 2006C, such as Node Bs, eNBs, gNBs, or other types of wireless Access Points (APs), each defining a corresponding coverage area 2008A, 2008B, 2008C. Each base station 2006A, 2006B, 2006C is connectable to the core network 2004 over a wired or wireless connection 2010. A first UE 2012 located in coverage area 2008C is configured to wirelessly connect to, or be paged by, the corresponding base station 2006C. A second UE 2014 in coverage area 2008A is wirelessly connectable to the corresponding base station 2006A. While a plurality of UEs 2012, 2014 are illustrated in this example, the disclosed embodiments are equally applicable to a situation where a sole UE is in the coverage area or where a sole UE is connecting to the corresponding base station 2006.

The telecommunication network 2000 is itself connected to a host computer 2016, which may be embodied in the hardware and/or software of a standalone server, a cloud-implemented server, a distributed server, or as processing resources in a server farm. The host computer 2016 may be under the ownership or control of a service provider or may be operated by the service provider or on behalf of the service provider. Connections 2018 and 2020 between the telecommunication network 2000 and the host computer 2016 may extend directly from the core network 2004 to the host computer 2016 or may go via an optional intermediate network 2022. The intermediate network 2022 may be one of, or a combination of more than one of, a public, private, or hosted network; the intermediate network 2022, if any, may be a backbone network or the Internet; in particular, the intermediate network 2022 may comprise two or more sub-networks (not shown).

The communication system of Figure 20 as a whole enables connectivity between the connected UEs 2012, 2014 and the host computer 2016. The connectivity may be described as an Over-the-Top (OTT) connection 2024. The host computer 2016 and the connected UEs 2012, 2014 are configured to communicate data and/or signaling via the OTT connection 2024, using the access network 2002, the core network 2004, any intermediate network 2022, and possible further infrastructure (not shown) as intermediaries. The OTT connection 2024 may be transparent in the sense that the participating communication devices through which the OTT connection 2024 passes are unaware of routing of uplink and downlink communications. For example, the base station 2006 may not or need not be informed about the past routing of an incoming downlink communication with data originating from the host computer 2016 to be forwarded (e.g., handed over) to a connected UE 2012. Similarly, the base station 2006 need not be aware of the future routing of an outgoing uplink communication originating from the UE 2012 towards the host computer 2016.

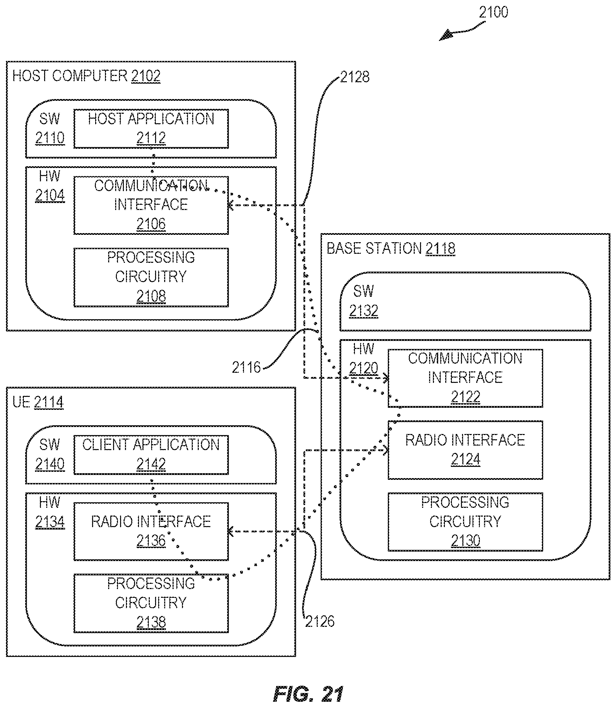

Example implementations, in accordance with an embodiment, of the UE, base station, and host computer discussed in the preceding paragraphs will now be described with reference to Figure 21. In a communication system 2100, a host computer 2102 comprises hardware 2104 including a communication interface 2106 configured to set up and maintain a wired or wireless connection with an interface of a different communication device of the communication system 2100. The host computer 2102 further comprises processing circuitry 2108, which may have storage and/or processing capabilities. In particular, the processing circuitry 2108 may comprise one or more programmable processors, ASICs, FPGAs, or combinations of these (not shown) adapted to execute instructions. The host computer 2102 further comprises software 2110, which is stored in or accessible by the host computer 2102 and executable by the processing circuitry 2108. The software 2110 includes a host application 2112. The host application 2112 may be operable to provide a service to a remote user, such as a UE 2114 connecting via an OTT connection 2116 terminating at the UE 2114 and the host computer 2102. In providing the service to the remote user, the host application 2112 may provide user data which is transmitted using the OTT connection 2116.

The communication system 2100 further includes a base station 2118 provided in a telecommunication system and comprising hardware 2120 enabling it to communicate with the host computer 2102 and with the UE 2114. The hardware 2120 may include a communication interface 2122 for setting up and maintaining a wired or wireless connection with an interface of a different communication device of the communication system 2100, as well as a radio interface 2124 for setting up and maintaining at least a wireless connection 2126 with the UE 2114 located in a coverage area (not shown in Figure 21) served by the base station 2118. The communication interface 2122 may be configured to facilitate a connection 2128 to the host computer 2102. The connection 2128 may be direct or it may pass through a core network (not shown in Figure 21) of the telecommunication system and/or through one or more intermediate networks outside the telecommunication system. In the embodiment shown, the hardware 2120 of the base station 2118 further includes processing circuitry 2130, which may comprise one or more programmable processors, ASICs, FPGAs, or combinations of these (not shown) adapted to execute instructions. The base station 2118 further has software 2132 stored internally or accessible via an external connection.

The communication system 2100 further includes the UE 2114 already referred to. The UE's 2114 hardware 2134 may include a radio interface 2136 configured to set up and maintain a wireless connection 2126 with a base station serving a coverage area in which the UE 2114 is currently located. The hardware 2134 of the UE 2114 further includes processing circuitry 2138, which may comprise one or more programmable processors, ASICs, FPGAs, or combinations of these (not shown) adapted to execute instructions. The UE 2114 further comprises software 2140, which is stored in or accessible by the UE 2114 and executable by the processing circuitry 2138. The software 2140 includes a client application 2142. The client application 2142 may be operable to provide a service to a human or non-human user via the UE 2114, with the support of the host computer 2102. In the host computer 2102, the executing host application 2112 may communicate with the executing client application 2142 via the OTT connection 2116 terminating at the UE 2114 and the host computer 2102. In providing the service to the user, the client application 2142 may receive request data from the host application 2112 and provide user data in response to the request data. The OTT connection 2116 may transfer both the request data and the user data. The client application 2142 may interact with the user to generate the user data that it provides.

It is noted that the host computer 2102, the base station 2118, and the UE 2114 illustrated in Figure 21 may be similar or identical to the host computer 2016, one of the base stations 2006A, 2006B, 2006C, and one of the UEs 2012, 2014 of Figure 20, respectively. This is to say, the inner workings of these entities may be as shown in Figure 21 and independently, the surrounding network topology may be that of Figure 20.

In Figure 21, the OTT connection 2116 has been drawn abstractly to illustrate the communication between the host computer 2102 and the UE 2114 via the base station 2118 without explicit reference to any intermediary devices and the precise routing of messages via these devices. The network infrastructure may determine the routing, which may be configured to hide from the UE 2114 or from the service provider operating the host computer 2102, or both. While the OTT connection 2116 is active, the network infrastructure may further take decisions by which it dynamically changes the routing (e.g., on the basis of load balancing consideration or reconfiguration of the network).

The wireless connection 2126 between the UE 2114 and the base station 2118 is in accordance with the teachings of the embodiments described throughout this disclosure. One or more of the various embodiments improve the performance of OTT services provided to the UE 2114 using the OTT connection 2116, in which the wireless connection 2126 forms the last segment. More precisely, the teachings of these embodiments may improve the e.g., data rate, latency, power consumption, etc. and thereby provide benefits such as e.g., reduced user waiting time, relaxed restriction on file size, better responsiveness, extended battery lifetime, etc.

A measurement procedure may be provided for the purpose of monitoring data rate, latency, and other factors on which the one or more embodiments improve. There may further be an optional network functionality for reconfiguring the OTT connection 2116 between the host computer 2102 and the UE 2114, in response to variations in the measurement results. The measurement procedure and/or the network functionality for reconfiguring the OTT connection 2116 may be implemented in the software 2110 and the hardware 2104 of the host computer 2102 or in the software 2140 and the hardware 2134 of the UE 2114, or both. In some embodiments, sensors (not shown) may be deployed in or in association with communication devices through which the OTT connection 2116 passes; the sensors may participate in the measurement procedure by supplying values of the monitored quantities exemplified above, or supplying values of other physical quantities from which the software 2110, 2140 may compute or estimate the monitored quantities. The reconfiguring of the OTT connection 2116 may include message format, retransmission settings, preferred routing, etc.; the reconfiguring need not affect the base station 2118, and it may be unknown or imperceptible to the base station 2118. Such procedures and functionalities may be known and practiced in the art. In certain embodiments, measurements may involve proprietary UE signaling facilitating the host computer 2102's measurements of throughput, propagation times, latency, and the like. The measurements may be implemented in that the software 2110 and 2140 causes messages to be transmitted, in particular empty or 'dummy' messages, using the OTT connection 2116 while it monitors propagation times, errors, etc.

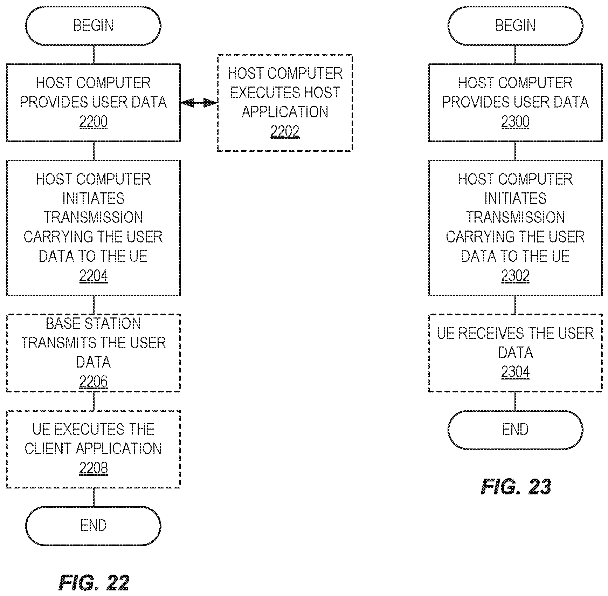

Figure 22 is a flowchart illustrating a method implemented in a communication system, in accordance with one embodiment. The communication system includes a host computer, a base station, and a UE which may be those described with reference to Figures 20 and 21. For simplicity of the present disclosure, only drawing references to Figure 22 will be included in this section. In step 2200, the host computer provides user data. In sub-step 2202 (which may be optional) of step 2200, the host computer provides the user data by executing a host application. In step 2204, the host computer initiates a transmission carrying the user data to the UE. In step 2206 (which may be optional), the base station transmits to the UE the user data which was carried in the transmission that the host computer initiated, in accordance with the teachings of the embodiments described throughout this disclosure. In step 2208 (which may also be optional), the UE executes a client application associated with the host application executed by the host computer.

Figure 23 is a flowchart illustrating a method implemented in a communication system, in accordance with one embodiment. The communication system includes a host computer, a base station, and a UE which may be those described with reference to Figures 20 and 21. For simplicity of the present disclosure, only drawing references to Figure 23 will be included in this section. In step 2300 of the method, the host computer provides user data. In an optional sub-step (not shown) the host computer provides the user data by executing a host application. In step 2302, the host computer initiates a transmission carrying the user data to the UE. The transmission may pass via the base station, in accordance with the teachings of the embodiments described throughout this disclosure. In step 2304 (which may be optional), the UE receives the user data carried in the transmission.

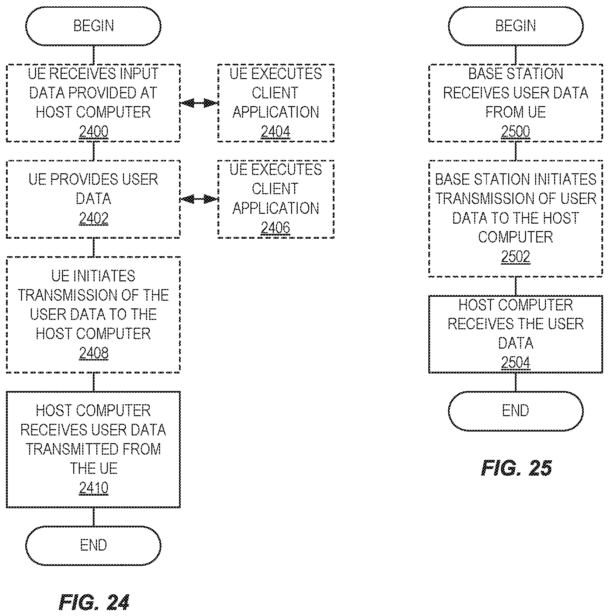

Figure 24 is a flowchart illustrating a method implemented in a communication system, in accordance with one embodiment. The communication system includes a host computer, a base station, and a UE which may be those described with reference to Figures 20 and 21. For simplicity of the present disclosure, only drawing references to Figure 24 will be included in this section. In step 2400 (which may be optional), the UE receives input data provided by the host computer. Additionally or alternatively, in step 2402, the UE provides user data. In sub-step 2404 (which may be optional) of step 2400, the UE provides the user data by executing a client application. In sub-step 2406 (which may be optional) of step 2402, the UE executes a client application which provides the user data in reaction to the received input data provided by the host computer. In providing the user data, the executed client application may further consider user input received from the user. Regardless of the specific manner in which the user data was provided, the UE initiates, in sub-step 2408 (which may be optional), transmission of the user data to the host computer. In step 2410 of the method, the host computer receives the user data transmitted from the UE, in accordance with the teachings of the embodiments described throughout this disclosure.

Figure 25 is a flowchart illustrating a method implemented in a communication system, in accordance with one embodiment. The communication system includes a host computer, a base station, and a UE which may be those described with reference to Figures 20 and 21. For simplicity of the present disclosure, only drawing references to Figure 25 will be included in this section. In step 2500 (which may be optional), in accordance with the teachings of the embodiments described throughout this disclosure, the base station receives user data from the UE. In step 2502 (which may be optional), the base station initiates transmission of the received user data to the host computer. In step 2504 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

### Embodiments

### Group A Embodiments

Embodiment 1: A method performed by a wireless device for constructing a codebook, the method comprising one or more of: defining (1300) a first PDCCH occasion among multiple PDCCH occasions associated with a PDCCH; identifying (1302) the first PDCCH occasion for each detected DCI; and constructing (1304) a codebook based on the first PDCCH occasion of all detected PDCCHs with a counter field in the corresponding DCIs.

Embodiment 2: The method of embodiment 1 wherein the codebook comprises a Type 2 HARQ ACK codebook.

Embodiment 3: The method of any of embodiments 1 to 2 wherein the counter field comprises a counter Downlink Assignment Indicator, DAI, field.

Embodiment 4: The method of any of embodiments 1 to 2 wherein the wireless device comprises a User Equipment, UE.

Embodiment 5: The method of any of embodiments 1 to 4, further comprising: receiving, from a network node, multiple search space sets and PDCCH repetition in a subset of the search space sets.

Embodiment 6: The method of any of embodiments 1 to 5, further comprising: monitoring the first and the second PDCCHs and if detected, decoding the corresponding PDSCH.

Embodiment 7: The method of any of embodiments 1 to 6, further comprising: determining a first PDCCH occasion for the first PDCCH when it is detected.

Embodiment 8: The method of any of embodiments 1 to 7, further comprising: constructing a Type 2 HARQ ACK codebook based on the first PDCCH occasion of the first PDCCH and/or the second PDCCH, and the decoding status of the first and the second PDSCH.

Embodiment 9: The method of any of embodiments 1 to 8 wherein receiving the multiple search space sets and the PDCCH repetition in a subset of the search space sets comprises: receiving multiple linked PDCCH candidates in a same or different search space sets over which a PDCCH may be repeated.

Embodiment 10: The method of any of embodiments 1 to 9 wherein the first PDCCH occasion corresponds to a linked PDCCH candidate that occurs first in time.

Embodiment 11: The method of any of embodiments 1 to 10 wherein the first PDCCH occasion corresponds to one of: a. a linked PDCCH candidate with a lower (or higher) PDCCH candidate index; b. a linked PDCCH candidate in a CORESET with a lower (or higher) CORESET ID; and c. a linked PDCCH candidate in a SS set with a lower (or higher) SS set ID.

Embodiment 12: The method of any of embodiments 1 to 11 wherein a value of the counter field in a DCI carried in a PDCCH repeated in multiple PDCCH occasions is determined based on the first PDCCH occasion in case of PDCCH repetition.

Embodiment 13: The method of any of embodiments 1 to 12 wherein constructing a Type 2 HARQ ACK codebook based on the first PDCCH occasion comprises allocating a HARQ ACK bit(s) to the first PDSCH scheduled by the first PDCCH transmitted in the first PDCCH occasion.

Embodiment 14: The method of any of the previous embodiments, further comprising: providing user data; and forwarding the user data to a host computer via the transmission to the base station.

### Group B Embodiments

Embodiment 15: A method performed by a base station for updating a counter , the method comprising one or more of: defining (1400) a first PDCCH occasion among multiple PDCCH occasions associated with a DCI; identifying (1402) the first PDCCH occasion; and incrementing (1404) the counter at the first PDCCH occasion and indicating the counter value in a counter field in the DCI.

Embodiment 16: The method of embodiment 1 wherein the PDCCH schedules a PDSCH, a SPS release, or a Scell dormancy.

Embodiment 17: The method of any of embodiments 15 to 16 wherein the counter field comprises a counter Downlink Assignment Indicator, DAI, field.

Embodiment 18: The method of any of embodiments 15 to 17 wherein the base station comprises a gNB.

Embodiment 19: The method of any of embodiments 15 to 18, further comprising: configuring a wireless device with multiple search space sets and PDCCH repetition in a subset of the search space sets.

Embodiment 20: The method of any of embodiments 15 to 19, further comprising: scheduling a first PDSCH with a first PDCCH which is repeated in multiple PDCCH occasions and a second PDSCH with a second PDCCH without repetition.

Embodiment 21: The method of any of embodiments 15 to 20, further comprising: determining a first PDCCH occasion for the first PDCCH.

Embodiment 22: The method of embodiment 1 where the incrementing the counter comprises adding one to the counter.

Embodiment 23: The method of any of embodiments 15 to 22 wherein configuring the wireless device with the multiple search space sets and the PDCCH repetition in a subset of the search space sets comprises: configuring the wireless device with multiple linked PDCCH candidates in a same or different search space sets over which a PDCCH may be repeated.

Embodiment 24: The method of any of embodiments 15 to 23 wherein the first PDCCH occasion corresponds to a linked PDCCH candidate that occurs first in time.

Embodiment 25: The method of any of embodiments 15 to 24 wherein the first PDCCH occasion corresponds to one of: a. a linked PDCCH candidate with a lower (or higher) PDCCH candidate index; b. a linked PDCCH candidate in a CORESET with a lower (or higher) CORESET ID; and c. a linked PDCCH candidate in a SS set with a lower (or higher) SS set ID.

Embodiment 26: The method of any of embodiments 15 to 25 wherein a value of the counter field in a DCI carried in a PDCCH repeated in multiple PDCCH occasions is determined based on the first PDCCH occasion in case of PDCCH repetition.

Embodiment 28: The method of any of the previous embodiments, further comprising: obtaining user data; and forwarding the user data to a host computer or a wireless device.

### Group C Embodiments

Embodiment 29: A wireless device for constructing a codebook, the wireless device comprising: processing circuitry configured to perform any of the steps of any of the Group A embodiments; and power supply circuitry configured to supply power to the wireless device.

Embodiment 30: A base station for incrementing a counter, the base station comprising: processing circuitry configured to perform any of the steps of any of the Group B embodiments; and power supply circuitry configured to supply power to the base station.

Embodiment 31: A User Equipment, UE, for constructing a codebook, the UE comprising: an antenna configured to send and receive wireless signals; radio front-end circuitry connected to the antenna and to processing circuitry, and configured to condition signals communicated between the antenna and the processing circuitry; the processing circuitry being configured to perform any of the steps of any of the Group A embodiments; an input interface connected to the processing circuitry and configured to allow input of information into the UE to be processed by the processing circuitry; an output interface connected to the processing circuitry and configured to output information from the UE that has been processed by the processing circuitry; and a battery connected to the processing circuitry and configured to supply power to the UE.

Embodiment 32: A communication system including a host computer comprising: processing circuitry configured to provide user data; and a communication interface configured to forward the user data to a cellular network for transmission to a User Equipment, UE; wherein the cellular network comprises a base station having a radio interface and processing circuitry, the base station's processing circuitry configured to perform any of the steps of any of the Group B embodiments.

Embodiment 33: The communication system of the previous embodiment further including the base station.

Embodiment 34: The communication system of the previous 2 embodiments, further including the UE, wherein the UE is configured to communicate with the base station.

Embodiment 35: The communication system of the previous 3 embodiments, wherein: the processing circuitry of the host computer is configured to execute a host application, thereby providing the user data; and the UE comprises processing circuitry configured to execute a client application associated with the host application.

Embodiment 36: A method implemented in a communication system including a host computer, a base station, and a User Equipment, UE, the method comprising: at the host computer, providing user data; and at the host computer, initiating a transmission carrying the user data to the UE via a cellular network comprising the base station, wherein the base station performs any of the steps of any of the Group B embodiments.

Embodiment 37: The method of the previous embodiment, further comprising, at the base station, transmitting the user data.

Embodiment 38: The method of the previous 2 embodiments, wherein the user data is provided at the host computer by executing a host application, the method further comprising, at the UE, executing a client application associated with the host application.

Embodiment 39: A User Equipment, UE, configured to communicate with a base station, the UE comprising a radio interface and processing circuitry configured to perform the method of the previous 3 embodiments.

Embodiment 40: A communication system including a host computer comprising: processing circuitry configured to provide user data; and a communication interface configured to forward user data to a cellular network for transmission to a User Equipment, UE; wherein the UE comprises a radio interface and processing circuitry, the UE's components configured to perform any of the steps of any of the Group A embodiments.

Embodiment 41: The communication system of the previous embodiment, wherein the cellular network further includes a base station configured to communicate with the UE.

Embodiment 42: The communication system of the previous 2 embodiments, wherein: the processing circuitry of the host computer is configured to execute a host application, thereby providing the user data; and the UE's processing circuitry is configured to execute a client application associated with the host application.

Embodiment 43: A method implemented in a communication system including a host computer, a base station, and a User Equipment, UE, the method comprising: at the host computer, providing user data; and at the host computer, initiating a transmission carrying the user data to the UE via a cellular network comprising the base station, wherein the UE performs any of the steps of any of the Group A embodiments.

Embodiment 44: The method of the previous embodiment, further comprising at the UE, receiving the user data from the base station.

Embodiment 45: A communication system including a host computer comprising: communication interface configured to receive user data originating from a transmission from a User Equipment, UE, to a base station; wherein the UE comprises a radio interface and processing circuitry, the UE's processing circuitry configured to perform any of the steps of any of the Group A embodiments.

Embodiment 46: The communication system of the previous embodiment, further including the UE.

Embodiment 47: The communication system of the previous 2 embodiments, further including the base station, wherein the base station comprises a radio interface configured to communicate with the UE and a communication interface configured to forward to the host computer the user data carried by a transmission from the UE to the base station.

Embodiment 48: The communication system of the previous 3 embodiments, wherein: the processing circuitry of the host computer is configured to execute a host application; and the UE's processing circuitry is configured to execute a client application associated with the host application, thereby providing the user data.

Embodiment 49: The communication system of the previous 4 embodiments, wherein: the processing circuitry of the host computer is configured to execute a host application, thereby providing request data; and the UE's processing circuitry is configured to execute a client application associated with the host application, thereby providing the user data in response to the request data.

Embodiment 50: A method implemented in a communication system including a host computer, a base station, and a User Equipment, UE, the method comprising: at the host computer, receiving user data transmitted to the base station from the UE, wherein the UE performs any of the steps of any of the Group A embodiments.

Embodiment 51: The method of the previous embodiment, further comprising, at the UE, providing the user data to the base station.

Embodiment 52: The method of the previous 2 embodiments, further comprising: at the UE, executing a client application, thereby providing the user data to be transmitted; and at the host computer, executing a host application associated with the client application.

Embodiment 53: The method of the previous 3 embodiments, further comprising: at the UE, executing a client application; and at the UE, receiving input data to the client application, the input data being provided at the host computer by executing a host application associated with the client application; wherein the user data to be transmitted is provided by the client application in response to the input data.

Embodiment 54: A communication system including a host computer comprising a communication interface configured to receive user data originating from a transmission from a User Equipment, UE, to a base station, wherein the base station comprises a radio interface and processing circuitry, the base station's processing circuitry configured to perform any of the steps of any of the Group B embodiments.

Embodiment 55: The communication system of the previous embodiment further including the base station.

Embodiment 56: The communication system of the previous 2 embodiments, further including the UE, wherein the UE is configured to communicate with the base station.

Embodiment 57: The communication system of the previous 3 embodiments, wherein: the processing circuitry of the host computer is configured to execute a host application; and the UE is configured to execute a client application associated with the host application, thereby providing the user data to be received by the host computer.

Embodiment 58: A method implemented in a communication system including a host computer, a base station, and a User Equipment, UE, the method comprising: at the host computer, receiving, from the base station, user data originating from a transmission which the base station has received from the UE, wherein the UE performs any of the steps of any of the Group A embodiments.

Embodiment 59: The method of the previous embodiment, further comprising at the base station, receiving the user data from the UE.

Embodiment 60: The method of the previous 2 embodiments, further comprising at the base station, initiating a transmission of the received user data to the host computer.

Some embodiments of the present disclosure could be implemented using one or more of the following proposals.

Proposal 1 Confirm the working assumption for PDCCH reliability enhancements with non-SFN schemes and Option 2 + Case 1, i.e. support Alt3 (two SS sets associated with corresponding CORESETs).

Proposal 2 When PDCCH repetition is enabled for the UE, the default is that two PDCCH candidates are linked. FFS whether more than two can be configured to be linked

Proposal 3 Two blind decodes per PDCCH pair is counted towards BD limit for the UE when the PDCCH consists of two PDCCH candidates that are linked.

Proposal 4 Support Alt.2 and use one of the linked PDCCH candidates in a CORESET having the lowest controlResourceSetId or a SS set with lowest searchSpaceId in the linked SS sets.

Proposal 5 The PDCCH symbol occurring latest in time in a pair of linked PDCCH candidates is defined as the last symbol regardless of which PDCCH candidate(s) the UE actually have detected.

Proposal 6 The DAI counter DAI is incremented only at the first time a PDCCH is transmitted (i.e., at the first PDCCH occasion) in a linked pair of PDCCH candidates.

Proposal 7 The existing procedure for type 2 HARQ-ACK codebook construction is applied only for the first PDCCH occasion in case of PDCCH repetition regardless whether the PDCCH is actually detected in the first or/and the second PDCCH occasion.

Proposal 8 In case the CORESET is not configured as unavailable for PDSCH and if a PDSCH scheduled by a pair of PDCCHs overlap with resources in the CORESETs containing the PDCCHs, PDSCH rate matching is done around the union of the linked PDCCH candidates and corresponding DM-RS

Proposal 9 DCI Format 2-2/2-3 are also supported by multi-TRP based PDCCH enhancements.

Proposal 10 One of the two activated TCI states is used as the default TCI state, FFS whether the one is specified or indicated in a MAC CE activating the TCI states.

Proposal 11 Consider finalizing PDCCH enhancement with intra-slot PDCCH repetition first.

Proposal 12 For codebook/non-codebook based multi-TRP PUSCH, support two separate SRI fields in DCI, where the first SRI field indicates the SRI(s) corresponding to the first TRP and the second SRI field indicates the SRI(s) corresponding to the second TRP.

Proposal 13 For codebook based multi-TRP PUSCH, support two separate TPMI fields in DCI, where the first TPMI field indicates the TPMI corresponding to the first TRP and the second TPMI field indicates the TPMI corresponding to the second TRP. The number of layers indicated in the first TPMI field and the second TPMI field are the same.

Proposal 14 For per TRP closed-loop power control for PUSCH, Option 3 is supported where a second TPC field is added in DCI formats 0_1 / 0_2.

Proposal 15 Dynamic switching between PUSCH transmission to a single-TRP and multi-TRP should be supported, i.e. each PUSCH transmission is either targeting reception at one or at two TRPs.

Proposal 16 Two SRI/TPMI fields are supported for PUSCH repetition towards m-TRP.

Proposal 17 To dynamically indicate PUSCH transmission towards a single-TRP or multiple-TRPs, each SRI/TPMI field contains a codepoint that indicates whether the SRI/TPMI field is disabled or not.

Proposal 18 For CG PUSCH transmission towards multiple TRPs, support Alt.1.

Proposal 19 Reuse the same RV mapping method as in PUSCH repetition Type A for PUSCH repetition Type B

Proposal 20 Consider allowing back-to-back scheduling of PUSCH repetitions via multiple DCIs over multiple TRPs in NR Rel-17.

Proposal 21 To improve A-CSI reliability, support A-CSI multiplexing on at least two PUSCH occasions towards different TRPs in NR Rel-17.

Proposal 22 Intra-slot beam hopping (Scheme 2) is not supported in NR Rel-17.

Proposal 23 Support Multi-TRP intra-slot repetition (Scheme 3) in NR Rel-17

Proposal 24 Both short and long PUCCH formats are supported for Intra-slot repetition

Proposal 25 For per TRP closed-loop power control for PUCCH, support either Option 3 (two TPC fields in DCI 1_1/1_2) or Option 4 (one codepoint in TPC field indicating two TPC values) in NR Rel-17.

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| • 3GPP | Third Generation Partnership Project |
| • 5G | Fifth Generation |
| • 5GC | Fifth Generation Core |
| • 5GS | Fifth Generation System |
| • ACK | Acknowledgement |
| • AF | Application Function |
| • AMF | Access and Mobility Function |
| • AN | Access Network |
| • AP | Access Point |
| • ASIC | Application Specific Integrated Circuit |
| • AUSF | Authentication Server Function |
| • BWP | Bandwidth Part |
| • CCE | Control Channel Elements |
| • CG | Configured Grant |
| • CORESET | Control Resource Set |
| • CP-OFDM | Cyclic Prefix Orthogonal Frequency Division Multiplexing |
| • CPU | Central Processing Unit |
| • CSI | Channel State Information |
| • CSI-RS | Channel State Information Reference Signal |
| • CSS | Common Search Space |
| • DAI | Downlink Assignment Index |
| • DCI | Downlink Control Information |
| • DFT | Discrete Fourier Transform |
| • DL | Downlink |
| • DMRS | Demodulation Reference Signal |
| • DN | Data Network |
| • DSP | Digital Signal Processor |
| • eNB | Enhanced or Evolved Node B |
| • FPGA | Field Programmable Gate Array |
| • gNB | New Radio Base Station |
| • gNB-DU | New Radio Base Station Distributed Unit |
| • HARQ | Hybrid Automatic Repeat Request |
| • HSS | Home Subscriber Server |
| • IoT | Internet of Things |
| • IP | Internet Protocol |
| • LTE | Long Term Evolution |
| • MME | Mobility Management Entity |
| • MTC | Machine Type Communication |
| • NACK | Negative Acknowledgement |
| • NEF | Network Exposure Function |
| • NF | Network Function |
| • NR | New Radio |
| • NRF | Network Function Repository Function |
| • NSSF | Network Slice Selection Function |
| • OFDM | Orthogonal Frequency Division Multiplexing |
| • OTT | Over-the-Top |
| • PC | Personal Computer |
| • PCF | Policy Control Function |
| • PDCCH | Physical Downlink Control Channel |
| • PDSCH | Physical Downlink Shared Channel |
| • P-GW | Packet Data Network Gateway |
| • PUCCH | Physical Uplink Control Channel |
| • PUSCH | Physical Uplink Shared Channel |
| • QCL | Quasi Co-Located |
| • QoS | Quality of Service |
| • RAM | Random Access Memory |
| • RAN | Radio Access Network |
| • RB | Resource Block |
| • RE | Resource Element |
| • REG | Resource Element Group |
| • ROM | Read Only Memory |
| • RRH | Remote Radio Head |
| • RS | Reference Signal |
| • RTT | Round Trip Time |
| • SCEF | Service Capability Exposure Function |
| • SMF | Session Management Function |
| • SPS | Semi-Persistent Scheduled |
| • SR | Scheduling Request |
| • SPS | Sounding Reference Signal |
| • SS | Search Space |
| • SSB | Synchronization Signal Block |
| • TCI | Transmission Configuration Indicator |
| • UDM | Unified Data Management |
| • UE | User Equipment |
| • UPF | User Plane Function |
| • USS | UE Specific Search Space |

Those skilled in the art will recognize improvements and modifications to the embodiments of the present disclosure. All such improvements and modifications are considered within the scope of the concepts disclosed herein.

## Claims

1. A method performed by a wireless device (612, 1800) served by a base station (602, 606, 1500) for constructing a hybrid automatic repeat request acknowledgement, HARQ-ACK, codebook comprising at least one of HARQ-ACK information associated to at least one of a set of physical downlink shared channel, PDSCH, receptions scheduled by a first set of Downlink Control Information, DCI, formats and HARQ-ACK information associated to a second set of DCI formats without scheduling PDSCH reception, wherein the HARQ-ACK information is to be transmitted by the wireless device in a same uplink slot, and wherein each of the DCI formats is carried by a physical downlink control channel, PDCCH, wherein at least one PDCCH is repeated in multiple PDCCH candidates in multiple PDCCH monitoring occasions each having an index, the method comprising:
receiving (1300B) PDCCHs associated with the first and second sets of DCI formats;
determining (1302B) a first PDCCH monitoring occasion among the multiple PDCCH monitoring occasions for each of the at least one PDCCH;
constructing (1304B) the HARQ-ACK codebook by ordering the HARQ-ACK information associated with each PDCCH according to the associated PDCCH monitoring occasion index, wherein for each of the at least one PDCCH the associated PDCCH monitoring occasion is the first PDCCH monitoring occasion; and
transmitting (1306B), to the base station, the HARQ-ACK information in the codebook.

2. The method of claim 1 wherein:
- the first PDCCH monitoring occasion is a PDCCH monitoring occasion occurring first in time among the multiple PDCCH monitoring occasions; or
- the multiple PDCCH monitoring occasions are within a same time slot or a same PDCCH monitoring span; or
- the HARQ-ACK codebook comprises a Type 2 HARQ-ACK codebook.

3. The method of claim 1 or 2 wherein:
- each of the first and second sets of DCI formats comprises a counter Downlink Assignment Index, DAI, field containing accumulative number of DCI formats present up to the associated PDCCH monitoring occasion, wherein for a DCI associated with a PDCCH repeated in multiple PDCCH monitoring occasions, the associated PDCCH monitoring occasion corresponds to the first PDCCH monitoring occasion; and/or
- the wireless device comprises a User Equipment, UE; and/or
- the method further comprises: receiving, from a network node, a configuration of multiple search space sets and PDCCH repetition in a subset of the search space sets.

4. The method of any of claims 1 to 3, wherein:
- the configuration of PDCCH repetition comprises configuring multiple linked PDCCH candidates in the subset of the search space sets; and/or
- the wireless device operates in a New Radio, NR, network.

5. A computer-readable medium (1804) comprising code portions which, when executed on a processor (1802), configure the processor of wireless device (612, 1800) to perform the steps of a method according to any one of claims 1 to 4.

6. A method performed by a base station (602, 606, 1500) serving a wireless (612, 1800) device for updating a counter in a Downlink Control Information, DCI, format being carried by a Physical Downlink Control Channel, PDCCH, wherein the PDCCH is repeated in multiple PDCCH candidates in multiple PDCCH monitoring occasions , the method comprising:
determining (1400B) a first PDCCH monitoring occasion among the multiple PDCCH monitoring occasions;
incrementing (1402B) the counter at the first PDCCH monitoring occasion and indicating the counter value in a counter field in the DCI;
transmitting (1404B), to the wireless device, the DCI in the PDCCH in the multiple PDCCH candidates;
receiving (1406B), from the wireless device, HARQ-ACK information associated with the PDCCH.

7. The method of claim 6 wherein:
- the DCI schedules one or more of: a Physical Downlink Shared Channel, PDSCH; an indication of Semi-Persistent Scheduled, SPS, PDSCH release; and an indication of Scell dormancy; and/or
- the counter field comprises a counter Downlink Assignment Index, DAI, field containing accumulative number of DCI formats present up to the PDCCH monitoring occasion associated with the DCI, wherein for a DCI associated with a PDCCH repeated in multiple PDCCH monitoring occasions, the associated PDCCH monitoring occasion is the first PDCCH monitoring occasion; and/or
- the base station comprises a gNB.

8. The method of claim 6 or 7, further comprising:
configuring the wireless device with multiple search space sets and PDCCH repetition in a subset of the search space sets.

9. The method of claim 6 wherein incrementing the counter comprises adding one to the counter.

10. The method of any of claims 6 to 9 wherein:
- configuring the wireless device with the multiple search space sets and the PDCCH repetition in a subset of the search space sets comprises: configuring the wireless device with multiple linked PDCCH candidates in a same or different search space sets over which a PDCCH may be repeated; and/or
- the first PDCCH monitoring occasion corresponds to a PDCCH monitoring occasion that occurs first in time among the multiple PDCCH monitoring occasions.

11. A computer-readable medium (1506) comprising code portions which, when executed on a processor (1504), configure the processor of a base station (602, 606, 1800) to perform the steps of a method according to any one of claims 6 to 10.

12. A wireless device (612, 1800) comprising:
one or more transmitters (1808);
one or more receivers (1810); and
processing circuitry (1802) associated with the one or more transmitters (1808) and the one or more receivers (1810), the processing circuitry (1802) configured to cause the wireless device (1800) to:
receive at least one physical downlink control channel, PDCCH, each being repeated in multiple PDCCH monitoring occasions;
receive one or more PDCCHs each being transmitted in a monitoring occasion;
determine a first PDCCH monitoring occasion among the multiple PDCCH monitoring occasions associated with each of the at least one PDCCH;
construct a hybrid automatic repeat request acknowledgement, HARQ-ACK, codebook by ordering HARQ-ACK information associated with each PDCCH according to the associated PDCCH monitoring occasion index, wherein for each of the at least one PDCCH the associated PDCCH monitoring occasion is the first PDCCH monitoring occasion.

13. The wireless device (1800) of claim 12 wherein the wireless device (1800) is further adapted to perform the method of any of claims 2 to 4.

14. A radio access node (602, 606, 1500) comprising:
one or more transmitters (1512);
one or more receivers (1514); and
processing circuitry (1504) associated with the one or more transmitters (1512) and the one or more receivers (1514), the processing circuitry (1504) configured to cause the radio access node (1500) to:
determine a first Physical Downlink Control Channel, PDCCH, monitoring occasion among multiple PDCCH monitoring occasions associated with a PDCCH;
increment a Downlink Assignment Index, DAI, counter at the first PDCCH monitoring occasion and indicate the counter value in a counter DAI field in a Downlink Control Information, DCI, carried in the PDCCH.

15. The radio access node (1500) of claim 14 wherein the radio access node (1500) is further adapted to perform the method of any of claims 7 to 10.

## Patentansprüche

1. Verfahren, das von einer drahtlosen Vorrichtung (612, 1800) durchgeführt wird, die von einer Basisstation (602, 606, 1500) bedient wird, zur Erstellung eines Codebuchs für die Bestätigung einer Hybrid Automatic Repeat Request, HARQ-ACK, das mindestens eines von HARQ-ACK-Informationen, die mit mindestens einem von einem Satz von Physical Downlink Shared Channel-Empfängen, PDSCH-Empfängen, assoziiert sind, die durch einen ersten Satz von Downlink-Steuerinformationsformaten, DCI-Formaten, disponiert werden, und HARQ-ACK-Informationen umfasst, die mit einem zweiten Satz von DCI-Formaten assoziiert sind, ohne PDSCH-Empfang zu disponieren, wobei die HARQ-ACK-Informationen von der drahtlosen Vorrichtung in einem gleichen Uplink-Schlitz gesendet werden sollen, und wobei jedes der DCI-Formate durch einen Physical Downlink Control Channel, PDCCH, übertragen wird, wobei mindestens ein PDCCH in mehreren PDCCH-Kandidaten bei mehreren PDCCH-Überwachungsgelegenheiten wiederholt wird, die jeweils einen Index aufweisen, wobei das Verfahren Folgendes umfasst:
Empfangen (1300B) von PDCCHs, die mit dem ersten und dem zweiten Satz von DCI-Formaten assoziiert sind;
Bestimmen (1302B) einer ersten PDCCH-Überwachungsgelegenheit unter den mehreren PDCCH-Überwachungsgelegenheiten für jeden des mindestens einen PDCCH;
Erstellen (1304B) des HARQ-ACK-Codebuchs durch Ordnen der mit jedem PDCCH assoziierten HARQ-ACK-Informationen gemäß dem assoziierten PDCCH-Überwachungsgelegenheitsindex, wobei für jeden des mindestens einen PDCCH die assoziierte PDCCH-Überwachungsgelegenheit die erste PDCCH-Überwachungsgelegenheit ist; und
Senden (1306B) der HARQ-ACK-Information in dem Codebuch an die Basisstation.

2. Verfahren nach Anspruch 1, wobei:
- die erste PDCCH-Überwachungsgelegenheit eine PDCCH-Überwachungsgelegenheit ist, die unter den mehreren PDCCH-Überwachungsgelegenheiten zeitlich als erste auftritt; oder
- die mehreren PDCCH-Überwachungsgelegenheiten innerhalb eines gleichen Zeitschlitzes oder einer gleichen PDCCH-Überwachungszeitspanne liegen; oder
- das HARQ-ACK-Codebuch ein Typ-2-HARQ-ACK-Codebuch umfasst.

3. Verfahren nach Anspruch 1 oder 2, wobei:
- jeder des ersten und des zweiten Satzes von DCI-Formaten ein Downlink-Zuordnungsindex-Zählerfeld, DAI-Zählerfeld, umfasst, das eine akkumulative Anzahl von DCI-Formaten enthält, die bis zu der assoziierten PDCCH-Überwachungsgelegenheit vorhanden sind, wobei für DCI, die mit einem PDCCH assoziiert sind, der bei mehreren PDCCH-Überwachungsgelegenheiten wiederholt wird, die assoziierte PDCCH-Überwachungsgelegenheit der ersten PDCCH-Überwachungsgelegenheit entspricht; und/oder
- die drahtlose Vorrichtung eine Benutzereinrichtung, UE, umfasst; und/oder
- das Verfahren ferner Folgendes umfasst: Empfangen einer Konfiguration mehrerer Suchraumsätze und einer PDCCH-Wiederholung in einer Teilmenge der Suchraumsätze von einem Netzwerkknoten.

4. Verfahren nach einem der Ansprüche 1 bis 3, wobei:
- die Konfiguration der PDCCH-Wiederholung Konfigurieren mehrerer verknüpfter PDCCH-Kandidaten in der Teilmenge der Suchraumsätze umfasst; und/oder
- die drahtlose Vorrichtung in einem New Radio-Netzwerk, NR-Netzwerk, operiert.

5. Computerlesbares Medium (1804), umfassend Codeabschnitte, die bei Ausführung auf einem Prozessor (1802) den Prozessor einer drahtlosen Vorrichtung (612, 1800) dazu konfigurieren, die Schritte eines Verfahrens nach einem der Ansprüche 1 bis 4 auszuführen.

6. Verfahren, das von einer Basisstation (602, 606, 1500) durchgeführt wird, die eine drahtlose Vorrichtung (612, 1800) bedient, zur Aktualisierung eines Zählers in einem Downlink-Steuerinformationsformat, DCI-Format, das von einem Physical Downlink Control Channel, PDCCH, übertragen wird, wobei der PDCCH in mehreren PDCCH-Kandidaten bei mehreren PDCCH-Überwachungsgelegenheiten wiederholt wird, wobei das Verfahren Folgendes umfasst:
Bestimmen (1400B) einer ersten PDCCH-Überwachungsgelegenheit unter den mehreren PDCCH-Überwachungsgelegenheiten;
Inkrementieren (1402B) des Zählers bei der ersten PDCCH-Überwachungsgelegenheit und Angeben des Zählerwerts in einem Zählerfeld in den DCI;
Senden (1404B) der DCI in dem PDCCH in den mehreren PDCCH-Kandidaten an die drahtlose Vorrichtung;
Empfangen (1406B) von HARQ-ACK-Informationen, die mit dem PDCCH assoziiert sind, von der drahtlosen Vorrichtung.

7. Verfahren nach Anspruch 6, wobei:
- die DCI eines oder mehrere von Folgenden disponieren: einen Physical Downlink Shared Channel, PDSCH; eine Angabe einer Semi-Persistent-Scheduled-PDSCH-Freigabe, SPS-PDSCH-Freigabe; und eine Angabe eines Scell-Ruhezustands; und/oder
- das Zählerfeld ein Downlink-Zuordnungsindex-Zählerfeld, DAI-Zählerfeld umfasst, das eine akkumulative Anzahl von DCI-Formaten enthält, die bis zu der PDCCH-Überwachungsgelegenheit vorhanden sind, die mit den DCI assoziiert ist, wobei für DCI, die mit einem PDCCH assoziiert sind, der bei mehreren PDCCH-Überwachungsgelegenheiten wiederholt wird, die assoziierte PDCCH-Überwachungsgelegenheit der ersten PDCCH-Überwachungsgelegenheit entspricht; und/oder
- die Basisstation einen gNB umfasst.

8. Verfahren nach Anspruch 6 oder 7, ferner umfassend:
Konfigurieren der drahtlosen Vorrichtung mit mehreren Suchraumsätzen und einer PDCCH-Wiederholung in der Teilmenge der Suchraumsätze.

9. Verfahren nach Anspruch 6, wobei das Inkrementieren des Zählers Addieren von eins zu dem Zähler umfasst.

10. Verfahren nach einem der Ansprüche 6 bis 9, wobei:
- das Konfigurieren der drahtlosen Vorrichtung mit den mehreren Suchraumsätzen und der PDCCH-Wiederholung in der Teilmenge der Suchraumsätze Folgendes umfasst: Konfigurieren der drahtlosen Vorrichtung mit mehreren verknüpften PDCCH-Kandidaten in einem gleichen Suchraumsatz oder verschiedenen Suchraumsätzen, über die ein PDCCH wiederholt werden kann; und/oder
- die erste PDCCH-Überwachungsgelegenheit einer PDCCH-Überwachungsgelegenheit entspricht, die unter den mehreren PDCCH-Überwachungsgelegenheiten zeitlich als erste auftritt.

11. Computerlesbares Medium (1506), umfassend Codeabschnitte, die bei Ausführung auf einem Prozessor (1504) den Prozessor einer Basisstation (602, 606, 1800) dazu konfigurieren, die Schritte eines Verfahrens nach einem der Ansprüche 6 bis 10 auszuführen.

12. Drahtlose Vorrichtung (612, 1800), umfassend:
einen oder mehrere Sender (1808);
einen oder mehrere Empfänger (1810); und
Verarbeitungsschaltungsanordnung (1802), die mit dem einen oder den mehreren Sendern (1808) und dem einen oder den mehreren Empfängern (1810) assoziiert ist, wobei die Verarbeitungsschaltungsanordnung (1802) dazu konfiguriert ist, die drahtlose Vorrichtung (1800) zu Folgendem zu veranlassen:
Empfangen mindestens eines Physical Downlink Control Channel, PDCCH, die jeweils bei mehreren PDCCH-Überwachungsgelegenheiten wiederholt werden;
Empfangen eines oder mehrerer PDCCHs, die jeweils bei einer Überwachungsgelegenheit gesendet werden;
Bestimmen einer ersten PDCCH-Überwachungsgelegenheit unter den mehreren PDCCH-Überwachungsgelegenheiten, die mit jedem des mindestens einen PDCCH assoziiert sind;
Erstellen eines Codebuch für die Bestätigung einer Hybrid Automatic Repeat Request, HARQ-ACK, durch Ordnen von HARQ-ACK-Informationen, die mit jedem PDCCH assoziiert sind, gemäß dem assoziierten PDCCH-Überwachungsgelegenheitsindex,
wobei für jeden des mindestens einen PDCCH die assoziierte PDCCH-Überwachungsgelegenheit die erste PDCCH-Überwachungsgelegenheit ist.

13. Drahtlose Vorrichtung (1800) nach Anspruch 12, wobei die drahtlose Vorrichtung (1800) ferner dazu ausgelegt ist, das Verfahren nach einem der Ansprüche 2 bis 4 durchzuführen.

14. Funkzugangsknoten (602, 606, 1500), umfassend:
einen oder mehrere Sender (1512); einen oder mehrere Empfänger (1514); und
Verarbeitungsschaltungsanordnung (1504), die mit dem einen oder den mehreren Sendern (1512) und dem einen oder den mehreren Empfängern (1514) assoziiert ist, wobei die Verarbeitungsschaltungsanordnung (1504) dazu konfiguriert ist, dass sie den Funkzugangsknoten (1500) zu Folgendem zu veranlassen:
Bestimmen einer ersten Physical Downlink Control Channel-Überwachungsgelegenheit, PDCCH-Überwachungsgelegenheit, unter mehreren PDCCH-Gelegenheiten, die mit einem PDCCH assoziiert sind;
Inkrementieren eines Downlink-Zuordnungsindexzählers, DAI-Zählers, bei der ersten PDCCH-Überwachungsgelegenheit und Angeben des Zählerwerts in einem DAI-Zählerfeld in Downlink-Steuerinformationen, DCI, die in dem PDCCH übertragen werden.

15. Funkzugangsknoten (1500) nach Anspruch 14, wobei der Funkzugangsknoten (1500) ferner dazu ausgelegt ist, das Verfahren nach einem der Ansprüche 7 bis 10 durchzuführen.

## Revendications

1. Procédé réalisé par un dispositif sans fil (612, 1800) desservi par une station de base (602, 606, 1500) pour construire un livre de codes d'accusé de réception de demande de répétition automatique hybride, HARQ-ACK, comprenant au moins l'une parmi des informations de HARQ-ACK associées à au moins l'une d'un ensemble de réceptions de canal partagé de liaison descendante physique, PDSCH, planifiées par un premier ensemble de formats d'informations de commande de liaison descendante, DCI, et des informations de HARQ-ACK associées à un deuxième ensemble de formats de DCI sans planification de réception de PDSCH, dans lequel les informations de HARQ-ACK doivent être transmises par le dispositif sans fil dans un même créneau de liaison montante, et dans lequel chacun des formats de DCI est porté par un canal de commande de liaison descendante physique, PDCCH, dans lequel au moins un PDCCH est répété dans de multiples candidats de PDCCH dans de multiples occasions de surveillance de PDCCH présentant chacune un indice, le procédé comprenant :
la réception (1300B) de PDCCH associés aux premier et deuxième ensembles de formats de DCI ;
la détermination (1302B) d'une première occasion de surveillance de PDCCH parmi les multiples occasions de surveillance de PDCCH pour chacun de l'au moins un PDCCH ;
la construction (1304B) du livre de codes de HARQ-ACK en ordonnant les informations de HARQ-ACK associées à chaque PDCCH selon l'indice d'occasion de surveillance de PDCCH associée, dans lequel, pour chacun de l'au moins un PDCCH, l'occasion de surveillance de PDCCH associée est la première occasion de surveillance de PDCCH ; et
la transmission (1306B), à la station de base, des informations de HARQ-ACK dans le livre de codes.

2. Procédé selon la revendication 1, dans lequel :
- la première occasion de surveillance de PDCCH est une occasion de surveillance de PDCCH survenant en premier dans le temps parmi les multiples occasions de surveillance de PDCCH ; ou
- les multiples occasions de surveillance de PDCCH se trouvent dans un même créneau ou dans un même intervalle de surveillance de PDCCH ; ou
- le livre de codes de HARQ-ACK comprend un livre de codes de HARQ-ACK de type 2.

3. Procédé selon la revendication 1 ou 2, dans lequel :
- chacun des premier et deuxième ensembles de formats de DCI comprend un champ de compteur d'indice d'attribution de liaison descendante, DAI, contenant un nombre cumulé de formats de DCI présents jusqu'à l'occasion de surveillance de PDCCH associée, dans lequel, pour des DCI associées à un PDCCH répété dans de multiples occasions de surveillance de PDCCH, l'occasion de surveillance de PDCCH associée correspond à la première occasion de surveillance de PDCCH ; et/ou
- le dispositif sans fil comprend un équipement utilisateur, UE ; et/ou
- le procédé comprend en outre : la réception, depuis un nœud de réseau, d'une configuration de multiples ensembles d'espaces de recherche et d'une répétition de PDCCH dans un sous-ensemble des ensembles d'espaces de recherche.

4. Procédé selon l'une quelconque des revendications 1 à 3, dans lequel :
- la configuration de répétition de PDCCH comprend la configuration de multiples candidats de PDCCH liés dans le sous-ensemble des ensembles d'espaces de recherche ; et/ou
- le dispositif sans fil fonctionne dans un réseau nouvelle radio, NR.

5. Support lisible par ordinateur (1804) comprenant des parties de code qui, lorsqu'elles sont exécutées sur un processeur (1802), configurent le processeur de dispositif sans fil (612, 1800) pour réaliser les étapes d'un procédé selon l'une quelconque des revendications 1 à 4.

6. Procédé réalisé par une station de base (602, 606, 1500) desservant un dispositif sans fil (612, 1800) pour mettre à jour un compteur dans un format d'informations de commande de liaison descendante, DCI, qui est porté par un canal de commande de liaison descendante physique, PDCCH, dans lequel le PDCCH est répété dans de multiples candidats de PDCCH dans de multiples occasions de surveillance de PDCCH, le procédé comprenant :
la détermination (1400B) d'une première occasion de surveillance de PDCCH parmi les multiples occasions de surveillance de PDCCH ;
l'incrémentation (1402B) du compteur à la première occasion de surveillance de PDCCH et l'indication de la valeur de compteur dans un champ de compteur dans les DCI ;
la transmission (1404B), au dispositif sans fil, des DCI dans le PDCCH dans les multiples candidats de PDCCH ;
la réception (1406B), depuis le dispositif sans fil, d'informations de HARQ-ACK associées au PDCCH.

7. Procédé selon la revendication 6, dans lequel :
- les DCI planifient un ou plusieurs parmi : un canal partagé de liaison descendante physique, PDSCH ; une indication de libération de PDSCH à planification semi-persistante, SPS ; et une indication d'inactivité de Scell ; et/ou
- le champ de compteur comprend un champ de compteur d'indice d'attribution de liaison descendante, DAI, contenant un nombre cumulé de formats de DCI présents jusqu'à l'occasion de surveillance de PDCCH associée aux DCI, dans lequel, pour des DCI associées à un PDCCH répété dans de multiples occasions de surveillance de PDCCH, l'occasion de surveillance de PDCCH associée est la première occasion de surveillance de PDCCH ; et/ou
- la station de base comprend un gNB.

8. Procédé selon la revendication 6 ou 7, comprenant en outre :
la configuration du dispositif sans fil avec de multiples ensembles d'espaces de recherche et une répétition de PDCCH dans un sous-ensemble des ensembles d'espaces de recherche.

9. Procédé selon la revendication 6, dans lequel l'incrémentation du compteur comprend l'ajout d'un au compteur.

10. Procédé selon l'une quelconque des revendications 6 à 9, dans lequel :
- la configuration du dispositif sans fil avec les multiples ensembles d'espaces de recherche et la répétition de PDCCH dans un sous-ensemble des ensembles d'espaces de recherche comprend : la configuration du dispositif sans fil avec de multiples candidats de PDCCH liés dans des ensembles d'espaces de recherche identiques ou différents sur lesquels un PDCCH peut être répété ; et/ou
- la première occasion de surveillance de PDCCH correspond à une occasion de surveillance de PDCCH qui survient en premier dans le temps parmi les multiples occasions de surveillance de PDCCH.

11. Support lisible par ordinateur (1506) comprenant des parties de code qui, lorsqu'elles sont exécutées sur un processeur (1504), configurent le processeur d'une station de base (602, 606, 1800) pour réaliser les étapes d'un procédé selon l'une quelconque des revendications 6 à 10.

12. Dispositif sans fil (612, 1800) comprenant :
un ou plusieurs émetteurs (1808) ;
un ou plusieurs récepteurs (1810) ; et
une circuiterie de traitement (1802) associée aux un ou plusieurs émetteurs (1808) et aux un ou plusieurs récepteurs (1810), la circuiterie de traitement (1802) étant configurée pour amener le dispositif sans fil (1800) à :
recevoir au moins un canal de commande de liaison descendante physique, PDCCH, chacun étant répété dans de multiples occasions de surveillance de PDCCH ;
recevoir un ou plusieurs PDCCH, chacun étant transmis dans une occasion de surveillance ;
déterminer une première occasion de surveillance de PDCCH parmi les multiples occasions de surveillance de PDCCH associées à chacun de l'au moins un PDCCH ;
construire un livre de codes d'accusé de réception de demande de répétition automatique hybride, HARQ-ACK, en ordonnant les informations de HARQ-ACK associées à chaque PDCCH selon l'indice d'occasion de surveillance de PDCCH associée, dans lequel, pour chacun de l'au moins un PDCCH, l'occasion de surveillance de PDCCH associée est la première occasion de surveillance de PDCCH.

13. Dispositif sans fil (1800) selon la revendication 12, dans lequel le dispositif sans fil (1800) est en outre adapté pour réaliser le procédé selon l'une quelconque des revendications 2 à 4.

14. Nœud d'accès radio (602, 606, 1500) comprenant :
un ou plusieurs émetteurs (1512) ;
un ou plusieurs récepteurs (1514) ; et
une circuiterie de traitement (1504) associée aux un ou plusieurs émetteurs (1512) et aux un ou plusieurs récepteurs (1514), la circuiterie de traitement (1504) étant configurée pour amener le nœud d'accès radio (1500) à :
déterminer une première occasion de surveillance de canal de commande de liaison descendante physique, PDCCH, parmi de multiples occasions de surveillance de PDCCH associées à un PDCCH ;
incrémenter un compteur d'indice d'attribution de liaison descendante, DAI, à la première occasion de surveillance de PDCCH et indiquer la valeur de compteur dans un champ de compteur de DAI dans des informations de commande de liaison descendante, DCI, portées dans le PDCCH.

15. Nœud d'accès radio (1500) selon la revendication 14, dans lequel le nœud d'accès radio (1500) est en outre adapté pour réaliser le procédé selon l'une quelconque des revendications 7 à 10.
